# EUROPEAN PATENT SPECIFICATION

(11) **EP 4 181 030 B1**
(45) Date of publication and mention of the grant of the patent: **23.07.2025**
(21) Application number: 21208109.5
(22) Date of filing: 15.11.2021
(51) Int. Cl.: G06N 5/022, G06N 20/00

(54) **COMPUTER-IMPLEMENTED METHOD, COMPUTER PROGRAM PRODUCT AND COMPUTER SYSTEM FOR PROBLEM-SOLVING BASED ON KNOWLEDGE GRAPHS**
COMPUTERIMPLEMENTIERTES VERFAHREN, COMPUTERPROGRAMMPRODUKT UND COMPUTERSYSTEM ZUR PROBLEMLÖSUNG AUF BASIS VON WISSENSGRAPHEN
PROCÉDÉ MIS EN UVRE PAR ORDINATEUR, PRODUIT-PROGRAMME INFORMATIQUE ET SYSTÈME INFORMATIQUE DE RÉSOLUTION DE PROBLÈMES SUR LA BASE DE GRAPHES DE CONNAISSANCES

(43) Date of publication of application: 17.05.2023
(73) Proprietor: SAP SE, 69190 Walldorf (DE)
(72) Inventor: Frison, Giancarlo, 69190 Walldorf (DE)
(74) Representative: Müller-Boré & Partner Patentanwälte PartG mbB

(56) References cited:
- CN-A- 111 091 003
- US-A1- 2016 328 443
- FRISON GIANCARLO: "Automatic Rule Learning over Knowledge Graphs", SAP CUSTOMER EXPERIENCE LABS, 23 July 2021 (2021-07-23), XP055914025, Retrieved from the Internet <URL:https://cxlabs.sap.com/2021/07/23/automatic-rule-learning-over-knowledge-graphs/> [retrieved on 20220420]
- FRISON GIANCARLO: "What are Knowledge Graphs? An Overview", SAP CUSTOMER EXPERIENCE LABS, 14 August 2020 (2020-08-14), XP055914045, Retrieved from the Internet <URL:https://cxlabs.sap.com/2020/08/14/what-are-knowledge-graphs-an-overview/> [retrieved on 20220420]
- INAL YAVUZ ET AL: "Users' Behavioral Strategies Toward Mobile App Problems: Fight or Flight", 14 August 2019, 20190814, PAGE(S) 37 - 49, XP047547701

## Description

### Technical Field

The following description relates to a computer-implemented mechanism based on knowledge graphs for dynamically determining an action to be performed in response to one or more events. In particular, the computer-implemented mechanism may be a troubleshooting mechanism.

### Background

There is a plurality of contexts in which an entity (e.g. a user, a company or a computing device) affected by an issue/problem may not be aware of it and/or of its causes. For example, if a user is using a new device, they may not realize that some functionalities of the device are impaired or sub-optimal and/or they may not understand why the battery is quickly drained. In another example, an e-commerce company may not be able to identify the reasons for an aborted purchase process.

The document "Automatic Rule Learning over Knowledge Graphs" by G. Frison, SAP Customer Experience Labs, July 23, 2021, discloses creating new rules based on training data sets comprising positive cases and negative cases.

US 2016/0328443 A1 discloses a computer-implemented method including storing electronically a knowledge graph that represents relationships between a plurality of knowledge models. Further steps include: receiving a query specification that identifies a knowledge model for a query dataset; determining with a computing device a path based on path cost criteria, where the path covers a portion of the knowledge graph across one or more knowledge models to one or more data sources; and generating an initial query plan according to one or more knowledge models along the determined path to fulfill the query specification with data from one or more data sources.

The document "Users' Behavioral Strategies Toward Mobile App Problems: Fight or Flight" by Y. Inal and T. Hacaloglu, IFIP 2019, discloses that, based on a survey, user responses to app problems involve either a fight strategy, in which individuals experiment with different ways to cope with a problem, or a flight strategy, in which users decide to uninstall an app and/or intend to use a different app.

### Summary

It is an object of the invention to provide an effective problem-solving approach.

The achievement of this object in accordance with the invention is set out in the independent claims. Further developments of the invention are the subject matter of the dependent claims.

According to one aspect, a computer-implemented method is provided. The computer-implemented method comprises:
- receiving trigger data comprising at least one trigger concept;
- retrieving at least one rule based on the trigger data, wherein a rule comprises:
   --a main label relating two concept variables;
   --a concatenated set of defining labels, each defining label relating two concept variables;
- obtaining problem data by querying a knowledge graph using the at least one rule and the at least one trigger concept, wherein the knowledge graph comprises a plurality of nodes and a plurality of edges, each node being associated with a respective concept and each edge being associated with a respective label, and wherein at least one node is associated with the at least one trigger concept;
- obtaining solution data based on the problem data;
- performing an action based on the solution data.

The trigger data comprise information about a trigger event, i.e. an event that automatically triggers the execution of the computer-implemented method. An event may be an action (e.g. performed by a user interacting with a computing device or by a piece of software/hardware) or a change in state (e.g. a state of a component of a device, such as a charge level of a battery, or a state of a variable, such as a string or a numerical value). The trigger event is a drop in the charge level of a smartphone battery and the information about the trigger event comprises model and manufacturer of the smartphone or of the smartphone battery.

An event may be characterized by one or more objective features (e.g. an identifier of an entity involved in the event or a timepoint of the event) and/or one or more contextual features, namely features that depend on the context of the event, wherein the context may be e.g. given by the occurrence of other events (before, simultaneous to or after the given event) and/or by the combination of a plurality of objective features. A contextual feature may be derived from other pieces of information defining the context, e.g. using artificial intelligence (AI) or a look-up table.

As mentioned, the event is a drop in the charge level of a smartphone battery: the charge level itself is an objective feature of the event, as well as specifics of the battery or of the smartphone such as model and manufacturer. A contextual feature may be a characterization of the event as "sudden drain", wherein this contextual feature may be derived from the current charge level and the time elapsed from the last recharging of the battery (and possibly also the specifics of the battery and the smartphone).

In another example, if the event is an online consumer hovering over the "buy" button on the page of an item, objective features of the event may be a user ID identifying the online consumer, model and manufacturer of the item. A contextual feature of the event may be a characterization of the event as "reluctancy", wherein this contextual feature may be derived from the non-occurrence of a click on the "buy" button within a predetermined amount of time.

An event may be classified as a trigger event on the basis of its objective feature(s) and/or contextual feature(s), e.g. using a lookup table or AI. Exemplarily, the trigger data may be collected and/or generated by a software application or a website script, and the trigger data may be received by another software application.

The trigger data relative to a given trigger event may comprise data containing the objective feature(s) and/or the contextual feature(s). Specifically, the trigger data comprise at least one trigger concept, which is any of the event features or a part of an event feature. A concept could be anything, e.g. an entity, descriptor, activity. The trigger data may comprise an attribute assigned to a concept, *attr*(*concept*)*.* The trigger concept is a smartphone battery.

The method further comprises retrieving at least one rule based on the trigger data, wherein a rule comprises labels. Generally, a label *L* expresses a relation between two concepts, a subject S and an object O, so that the notation *L* (S, O) may be used. A concatenated set of labels comprises at least two labels linked to each other in that they have (only) one concept in common. In other words, the object of one label may be the subject of the other label, *L* (*S*, *O*), *L'* (*S', O*'), with *O* ≡ *S*', or the two labels may have the same object or the same subject.

In some cases, the concatenated set of labels may comprise more than two linked labels, wherein a first label may be linked to a second label, which may, in turn, be linked to a third label and so on. If a label is linked to two labels, both its concepts are present twice in the set of labels, while if a label is linked to only one label, it has one concept that appears only once in the set of labels. The concatenated set of labels comprises only linked labels, i.e. it does not comprise any label that is not linked to at least another one. Further, a label may not be linked to more than two other labels.

The labels in a rule relate concept variables and not concepts, meaning that the concepts are not specified. Accordingly, labels in a rule take concept variables as "arguments" and each concept variable is configured to be initialized to a concept. Further, in some cases (e.g. for the universal rules discussed below), a rule may comprise label variables, wherein each label variable may be initialized to a label. In the following, in the context of labels and concepts, strings beginning with (or consisting in) a lowercase letter will be used for concepts/labels (e.g. *label1, a*) and uppercase letters will be used for concept/label variables (e.g. *L, A*)*.*

Specifically, a rule comprises a main label and a concatenated set of defining labels. The main label expresses a relation between two concept variables, wherein this relation can be defined by referring to other labels, the defining labels. In other words, the main label can be decomposed in a concatenated set of defining labels.

The concept variables related by the main label are a subset of those present in the defining labels, so that, if the concept variables in the defining labels get concepts assigned as discussed below, the concept variables of the main label get initialized as a consequence. Exemplarily, a rule may be expressed as *mainlabel* (*A, E*) *:=* (*I1*(*A, B*)*, l2(B, C), I3(D, C), I4*(*D, E*)) or as *L(A, C):= (I1(A,B), L(B,C)).* In some examples, a rule may further comprise other elements, like tags, as discussed below.

At least one rule is retrieved based on the trigger data and, in case a plurality of rules is retrieved, all rules are retrieved based on the trigger data. In other words, the one or more rules are retrieved depending on one or more pieces of the trigger data. For example, retrieving at least one rule may comprise selecting the at least one rule out of a plurality of available rules. The available rules may be provided in a data storage and may have been input by a qualified user.

A rule is associated with one or more tags and, if at least one tag matches a piece of trigger data (e.g. a contextual feature), the rule may be retrieved. In other cases, the rule may be retrieved only if all tags match respective pieces of trigger data. A match may be present if the tag is identical to the piece of trigger data or if there is a predetermined overlap between the tag and the piece of trigger data. For instance, if the tag and the piece of trigger data are character strings, there may be a match if the strings coincide or if they have at least *n* consecutive characters in common.

In some examples, a tag may be an attribute for a concept *attr(a)* or a label *attr(l)* or a concept variable *attr(A)* or a label variable *attr(L).* In the two latter cases, the match may be given if the trigger data comprise the same attribute, while in the former cases both the attribute and the concept/label may have to correspond. The one or more tags may be comprised in the rule (e.g. as a field) or may be metadata for the rule or may be otherwise linked to the rule, e.g. via a table.

The method further comprises obtaining problem data by querying a knowledge graph using the at least one rule and the at least one trigger concept. A knowledge graph comprises a plurality of nodes and a plurality of edges, each edge being associated with a respective label. Accordingly, a knowledge graph is a directed graph in which each edge has a direction from the subject to the object. Each node is associated with a concept, which can be either a subject or an object depending on the edge(s) connected to that node. In particular, a concept may be a subject for one or more edges and an object for one or more other edges.

Formally, given a set of nodes *N*, and a set of edges *E*, a knowledge graph is a subset of the cross product *N × E × N,* i.e. the number of edges *E* ⊆ *N* × *N.* An edge e connects two nodes, *e* (*n, n'*)*.* Each edge e carries a label *label* that describes the relation among the concepts s, o in the nodes *n*, *n'* that it connects. Accordingly, a knowledge graph can be seen as a data set comprising triples *label (s, o).* In other words, the knowledge graph stores relational information in the form of nodes linked by edges. A combination of a relation/label and the two concepts it links may be referred to as "fact".

A knowledge graph may be associated with a particular topic, i.e. contain information related to this topic. For example, a knowledge graph for an e-commerce website may contain nodes representing concepts such as specific products and their qualities (expensive/cheap, simple/complex...), with relations describing complementary products, linking products to their features and so on. In another example, a knowledge graph for an electronic device may contain nodes representing concepts such as make and model of hardware/software components, usage statistics, features like materials, etc., with relations linking the components to each other and to their functions and features and so on.

As mentioned, the trigger data comprise at least one trigger concept. The trigger concept corresponds to a concept associated with a node in the knowledge graph. Said otherwise, the knowledge graph comprises at least one node associated with the at least one trigger concept. Accordingly, the knowledge graph comprises information related to the trigger event. If the trigger data comprises a plurality of trigger concepts, the knowledge graph may comprise a corresponding plurality of nodes, each node being associated with a respective trigger node. More generally, the knowledge graph may comprise at least one node associated with at least one of the plurality of trigger concepts. Thus, the knowledge graph may also comprise only one node associated with one of the plurality of trigger concepts.

The knowledge graph to be queried is chosen among a plurality of knowledge graphs based on the trigger data, in particular the trigger concept(s). Namely, the knowledge graph comprising at least one node associated with a respective trigger concept may be selected. A plurality of knowledge graphs may be stored in a database.

As explained, a rule comprises labels having concept variables that take concepts as inputs (and, in some cases, even label variables), while the knowledge graph comprises defined labels and defined concepts associated with edges and nodes, respectively. Querying the knowledge graph using a rule and a trigger concept comprises assigning one or more concepts from the knowledge graph to the concept variables of the labels in the rule. "Querying the knowledge graph using a rule and a trigger concept" may also be referred to as "evaluating a rule using the knowledge graph and a trigger concept".

The knowledge graph is queried by retrieving the concepts linked by edges having the same labels as those present in the rule. In particular, querying the knowledge graph using the rule (retrieved based on the trigger data) and the trigger concept comprises: checking whether the main label of the rule is associated with any edge of the knowledge graph connected to the node associated with the trigger concept;
if so, retrieving as the problem data the concept associated with the other node connected to the edge associated with the main label;
if not:
   tracing a path in the knowledge graph starting from the node associated with the trigger concept by using the concatenated set of defining labels, thereby retrieving as the problem data the concept associated with the last node of the path;
   updating the knowledge graph by inserting an edge associated with the main label that connects the node associated with the trigger concept and the last node of the path.

Accordingly, two cases may be distinguished. In the first case, the node associated with the trigger concept (hereinafter referred to as "trigger node") is already connected by an edge associated with the main label of the rule to another node. In this case, the problem data are obtained by retrieving the concept associated with this other node.

In the second case, the trigger node does not have any edge associated with the main label of the rule. In this case, starting from the trigger node, the concatenated set of defining labels may be traced through the knowledge graph. A path in the knowledge graph is a sequence of two or more adjacent edges, wherein adjacent edges have a node in common. Thus, a set of concatenated labels can define a path in a knowledge graph.

Tracing the path in the knowledge graph using the defining labels and starting from the trigger node may comprise retrieving the concept associated with a first intermediate node, i.e. the node connected to the trigger node by a first defining label of the set of defining labels, then retrieving the concept associated with a second intermediate node, i.e. the node connected to the first intermediate node by a second defining label of the set of defining label, the second defining label being linked to the first defining label. If the set of defining labels comprises only two labels, the second intermediate node is also the last node. If there are more than two defining labels, the iterative retrieval of concepts from the knowledge graph proceeds until all defining labels have been used and the last node is reached.

For example, a rule comprising the following concatenated set of defining labels may be considered: *I1(A, B), l2(B, C), l3(D, C), l4(D, E),* wherein *A-E* are concept variables configured to receive respective inputs. If a is the trigger concept that is provided as input for the variable *A,* a first part of the query may be of the type *l1(a, ?)* and retrieve the second concept for *l1,* e.g. b, which is in turn used in a request of the type *l2(b, ?)* and so on, until the concept e for the variable *E* is retrieved.

When the defining labels are used, the trigger concept may be assigned as input for a concept variable of a specific defining label in various manners. For example, as mentioned, the trigger data may comprise an attribute assigned to the trigger concept and the rule may comprise a tag, which may be an attribute for a concept variable. In other words, one of the defining labels may be linked to the tag and to another defining label.

If an attribute for a trigger concept in the trigger data matches a tag in the rule, the concept variable of the attribute of the tag (and of the linked defining label) is initialized to that concept. For instance, if the concept a is a trigger concept associated with the attribute *attr* and a tag of the rule is *attr(A),* the concept variable *A* is initialized to a, which applies also to a defining label *I1(A,* B) in the rule.

As explained, in the second case, the defining labels (and, optionally, one or more tags) in the rule are fed with concepts from the knowledge graph and the trigger data. Via the concatenated set of defining labels, two concepts of the knowledge graph become directly linked to each other. In other words, the rule may be seen as a function that takes concepts as inputs and outputs a relation between two concepts. The output relation corresponds to the main label of the rule: continuing with the previous example, I*1(A, B), l2(B, C), l3(D, C), l4(D, E)* → *mainlabel(a, e).*

Accordingly, the knowledge graph may be updated by inserting an edge associated with the main label that connects the trigger node and the last node of the path. A knowledge graph that has never been queried using a rule may comprise only so-called "basic labels", i.e. labels that cannot be decomposed in one or more other labels. The basic labels may express fundamental relations, such as "isA" (e.g. a mammal is an animal). The basic labels may also be the building blocks for the rules.

By querying the knowledge graph using a rule and the trigger concept, problem data are obtained, which comprise in particular the concept (or "problem concept") associated with the last node of the path or with the node identified by the main label. It should be noted that the last node of the path ends up coinciding with the node identified by the main label after the knowledge graph is updated.

Problem data are data comprising information about a problem, such as an identification of the nature of the problem and/or of its underlying cause(s). The problem data may comprise only the problem concept, or the fact including the main label, the trigger concept and the problem concept.

When a rule is evaluated using the knowledge graph, there may be a plurality of paths corresponding to the concatenated set of defining labels or a plurality of edges associated with the main label that connect the trigger node, so that a plurality of problem concepts may be retrieved as problem data.

If the trigger data comprise a plurality of trigger concepts and one rule is retrieved, the rule may be evaluated a plurality of times, each time using a respective trigger concept. The problem data may, thus, comprise a plurality of problem concepts. If not all trigger concepts have a corresponding node in the knowledge graph, the rule is only evaluated for those that do. If the trigger data comprises one trigger concept and a plurality of rules is retrieved, each rule may be evaluated using the trigger concept. Also in this case the problem data may comprise a plurality of concepts.

In other examples, the plurality of trigger concepts may be used to initialize a corresponding plurality of concept variables in the rule, e.g. in the defining labels. In this case, the path may be constrained by having to include (or pass through) a plurality of trigger nodes.

If the trigger data comprise a plurality of trigger concepts and a plurality of rules is retrieved, in some examples, each rule may be evaluated using each trigger concept. In other examples, one or more rules may only be evaluated using a proper subset of the trigger concepts. For instance, a rule may only be evaluated with a given trigger concept if an attribute for that trigger concept matches a tag in the rule.

Exemplarily, in case the problem data comprise a plurality of problem concepts, which may construed as different hypotheses about a potential problem, the method may further comprise requesting user input about the problem data, e.g. prompting a user to select part of the problem data (a piece of problem data), such as a problem concept.

Whether there is one retrieved rule or a plurality of retrieved rules, if no rule can be successfully evaluated, the problem data may be set to a pre-defined concept which may indicate ignorance about the problem. A rule is not successfully evaluated if the query does not return any concept, which means that there is neither an edge associated with the main label nor a path corresponding to the defining labels in the knowledge graph.

Summarizing, rules as described enable a computing system to infer information that provides insight into the context provided by the trigger data. Indeed, depending on the trigger data, one or more appropriate rules are retrieved and, again, based on the trigger data, the rule(s) can be used to the obtain problem data by traversing the knowledge graph. Thanks to the rule(s), relevant aspects relating to the trigger event(s) may be effectively uncovered and meaningfully formulated. In particular, the trigger event(s) may be indicative of an underlying issue or problem that should be addressed and the problem data provide one or more concepts that expose the issue/problem and/or its cause(s).

In an example relating to e-commerce, the problem data may comprise the concept "inability", which expresses a user's concerns about not being able to use a product, which may be the trigger concept (e.g. a camera lens "XYZ"). In the claimed embodiment relating to computing device diagnostics, the problem data comprise a concept indicating a component (e.g. an app "W") that hinders the functioning of another component, the trigger concept ( "smartphone battery").

The method further comprises obtaining solution data based on (at least part of) the problem data. The solution data are obtained depending on the specific problem data and the solution data comprise information about a solution to the problem identified by the problem data. In some examples, the method may comprise obtaining solution data based on part of the problem data as selected by a user. In other words, the solution data may be obtained based on the selected part of the problem data, subsequent to a step of prompting a user to select part of the problem data.

The solution data may be obtained in different ways. In one alternative, the problem data is fed to an artificial intelligence system (AI) that has been trained to provide the solution data as an output. In another alternative, the problem data is checked against a database containing associations between problems and respective solutions. In a non-claimed example, obtaining solution data based on the problem data may comprise evaluating a solution rule using the knowledge graph, so that the solution data comprise a "solution concept". In other words, the solution data may be obtained by querying the knowledge graph using a solution rule, similarly to how the problem data are obtained.

Continuing with the e-commerce example above, the solution concept may be a course that explains how to use the product, therefore addressing the "inability" about using the product. In the computing device diagnostics embodiment, the solution concept is an alternative app for the same purpose, which consumes less energy.

As explained above, the obtained problem data comprise one or more problem concepts, i.e. concepts connected to the trigger node by the main label of one or more respective rules. The solution label may connect a problem concept to a solution concept. Accordingly, the concatenated set of defining labels of the solution rule may comprise the main label of a rule used to obtain the problem data, with the trigger concept and the problem concept being the inputs for the concept variables of such main label.

Exemplarily, the method may further comprise storing the solution data in the knowledge graph. In other words, the method may comprise updating the knowledge graph by inserting an edge associated with the solution label that connects the node associated with the problem concept and the node associated with the solution concept, if such an edge was not already present in the knowledge graph.

The method further comprises performing an action (or a plurality of actions, simultaneously and/or in sequence) based on (at least part of) the solution data. In other words, using the solution data, an action is determined and performed. The specific action depends on the corresponding solution data. The association between one or more actions and the solution data may be derived by an Al system or from a database (e.g. a table). In some examples, the action may be performed based not only on the solution data but also on the trigger data.

The action comprises uninstalling the app and installing the alternative app. Exemplarily, the action(s) may comprise any one of the following or a combination thereof (the list is not exhaustive): providing an output to a user, prompting an input from a user, starting an application, stopping an application, executing a script. The performing of the action may solve in a direct or indirect (e.g. thanks to a user intervention) manner the problem identified by the problem data.

If the problem data were set to a pre-defined concept because no rule could be successfully evaluated, the solution data may be a generic request for user input, such as "is there a problem?". In this case, the action may involve outputting such a request, e.g. displaying a pop-up window with a question to the user.

Therefore the method described heretofore has the advantageous technical effects that a problem can be efficiently and effectively addressed. In particular, the use of the rules provides a clear insight into possible problems which leads to an effective solution thereto. In this way, the method can assist a user in performing a technical task, e.g. troubleshooting a device, by means of a guided human-machine interaction process.

As mentioned, a plurality of rules may be retrieved. In some examples, each rule of the plurality of rules may have only basic labels as defining labels, so that the rules may be evaluated using the knowledge graph independently from each other. For instance, the plurality of rules may be evaluated in parallel. In other examples, at least one rule may build on another rule, meaning that a defining label of one rule is the main label of another rule. In this case, querying would not be successful if the former rule is evaluated before the latter rule. The plurality of rules may be evaluated (at least partially) in sequence, and, possibly, multiple times, so that rules building on other rules can be evaluated irrespective of the order in the sequence.

Specifically, in a particular example, retrieving the at least one rule may comprise retrieving a plurality of rules and obtaining the problem data (by querying the knowledge graph using the plurality of rules and a trigger concept) may comprise:
- performing a plurality of inference steps for the plurality of rules in sequence, each inference step comprising, for a respective rule:
   - checking whether the main label of the respective rule is associated with any edge of the knowledge graph connected to the node associated with the trigger concept;
   - if so, retrieving the concept associated with the other node connected to the edge associated with the main label;
   - if not:
      --- checking whether the concatenated set of defining labels is associated with at least a subset of adjacent edges of the knowledge graph connected to the node associated with the trigger concept;
      --- if so:
         ---- tracing a path in the knowledge graph starting from the node associated with the trigger concept by using the concatenated set of defining labels, thereby retrieving the concept associated with the last node of the path;
         ---- updating the knowledge graph by inserting an edge associated with the main label that connects the node associated with the trigger concept and the last node of the path;
         --- if not, directly proceeding to a subsequent inference step, if any is left;
- once the plurality of inference steps have been performed, determining whether the knowledge graph was updated;
- if the knowledge graph was updated, re-performing the plurality of inference steps for the plurality of rules in sequence.

Accordingly, for each rule of the plurality of rules, an inference step may be performed at least once. Each inference step comprises querying the knowledge graph using the respective rule and the trigger concept, in particular as previously explained, namely by trying to use the main label first and, if not present in the knowledge graph, using the set of defining labels.

For an inference step, there may be three possibilities when querying the knowledge graph:
1) there is an edge associated with the main label of the respective rule, in which case a concept is retrieved;
2) there is a set of adjacent edges associated with the set of defining labels of the respective rule, in which case a concept is retrieved;
3) there is neither an edge associated with the main label nor a set of adjacent edges associated with the set of defining labels, in which case no concept is retrieved.

Independently from which conditions are actually fulfilled, after the successful or unsuccessful querying, the method proceeds to performing a subsequent inference step. In case (3), the inference step does not involve any retrieval, so that the method can directly move on to the subsequent rule.

Thus, once the inference step for a given rule is concluded, the successive inference step in the sequence of inference steps is performed. For each rule of p rules an inference step is performed, i.e. p inference steps are performed one after the other. For any of inference steps 1 to p-1 there is at least one subsequent inference step left. Once the *p*-th inference step has been performed, there are no inference steps left to be performed, i.e. all the plurality of inference steps have been performed.

Once the sequence of inference steps has been completed, the method may comprise determining whether the knowledge graph was updated, e.g. by comparing the current version of the knowledge graph with a previous version or checking a log file that is configured to be modified any time the knowledge graph is updated. As a consequence of performing the plurality of inference steps, the knowledge graph will have been updated if at least one rule led to tracing a path using the defining labels, or, in other words, if new information was generated by evaluating the rules.

In this case, the plurality of inference steps are repeated once again, then it is again checked whether the knowledge graph was updated and so on. "Performing the plurality of inference steps" is repeated until it is determined that the knowledge graph was not updated. In other words, the method stops iterating the execution of the inference steps as soon as no new information is generated. "Re-performing" is to be understood as performing again.

In an illustrative instance, the plurality of rules may comprise three rules:
rule 1*: ml1:=(l1(A, B), l2(B, C))*
rule 2: *ml2:=(l3(A, B), l4(B, C), l5(C, D))*
rule 3: *ml3:=(l6(A, B), l7(B, C))*
with *l4 = ml3.*

The knowledge graph may exemplarily comprise edges associated to labels *ml1, l3, l5, 16* and *l7,* which are also adjacent in correspondence to the joined labels of the rules. When the three inference steps are performed for the first time, the first inference step (for rule 1) does not lead to an update, since there is already an edge associated to *ml1.* The second inference step, for rule 2, does not lead to an update nor to a retrieval of a concept, since *l4* has no associated edge in the knowledge graph. The third inference step, for rule 3, leads to an update of the knowledge graph, namely an edge associated with *ml3* is added to the knowledge graph.

If this new edge is adjacent to the edges of l3 and l5, during a first repetition of performing the three inference steps, the first inference step again does not lead to an update, while the second inference step this time does, namely an edge associated with *ml2* is added to the knowledge graph. The third inference step this time does not lead to an update, since *ml3* is already present in the previously updated knowledge graph.

Finally, the three inference steps are repeated a second time and, now, none of them leads to an update of the knowledge graph, thereby halting the execution of the inference steps.

Generally, if it is determined that the knowledge graph was not updated, no further action is performed. The problem data have been obtained and are then used to obtain solution data, as explained above, wherein the problem data may comprise one or more problem concepts. Exemplarily, the problem data may comprise the fact that was added last to the knowledge graph, or the problem concept in this fact.

As already mentioned, if none of the rules of the plurality of rules could be successfully evaluated, i.e. if no concept could be retrieved, the problem data may be set to a pre-defined concept which may indicate ignorance about the problem.

Similarly to what described above for the case of a single rule, if the trigger data comprise a plurality of trigger concepts, the plurality of inference steps may be performed (and, possibly, re-performed) a plurality of times, each time using a respective trigger concept.

In a particular example, more than one knowledge graph may be queried to obtain the problem data. Accordingly, the method may further comprise obtaining additional problem data by querying an additional knowledge graph using the at least one rule and the at least one trigger concept, wherein the solution data are obtained further based on the additional problem data. In other words, the method may comprise obtaining solution data based on the problem data and the additional problem data.

The above description about the knowledge graph and the problem data and how they are obtained applies mutatis mutandis to the additional knowledge graph and the additional problem data. The only difference between the knowledge graphs is their content.

For instance, the (first) knowledge graph may be a generic (i.e. not user-dependent) knowledge graph and the additional (or second) knowledge graph may be a user-specific knowledge graph, e.g. containing information based on user preferences, past behaviour etc.

In a particular example, the method may further comprise:
retrieving a plurality of universal rules;
generating supplementary data by querying the knowledge graph using each of the plurality of universal rules;
updating the knowledge graph using the supplementary data.

In particular, these steps may be performed before receiving the trigger data.

A universal rule may be a rule that does not relate to a specific topic or field of application and may in principle be applied to any knowledge graph, independently of its information content, to generate new information. The rules discussed heretofore, which are retrieved based on the trigger data, may be considered specific rules, that are suitable only for certain topics. Only specific rules are used to obtain the problem data.

Exemplarily, only the universal rules may comprise label variables. In particular, a universal rule may comprise only one label variable as placeholder for both the main label and one defining label. In other words, the syntax of a universal rule comprising a label variable may be such that the rule has a main label variable that corresponds to a defining label variable, e.g. *L(A,B):=(L(C,B), lab1(C,A)).*

The evaluation of the universal rules by using the knowledge graph may lead to the addition of new edges (the supplementary data) to the knowledge graph, similarly to what explained with respect to the specific rules above. **If** a universal rule comprises a label variable, querying the knowledge graph using said universal rule may comprise, further to assigning one or more concepts from the knowledge graph to the concept variables of the labels in the rule, assigning a label from the knowledge graph to a label variable.

Specifically, generating supplementary data by querying the knowledge graph using a universal rule may comprise:
fetching triples from the knowledge graph matching each of the defining labels or defining label variable;
selecting triples from the fetched triples that have common concepts as defined by the defining labels;
substituting concepts and, optionally, a label from the selected triples in the main label or main label variable.

Since no trigger data are used when evaluating the universal rules, all possible triples that correspond to each of the defining labels are considered at first and then narrowed down to those that are linked in the same manner as the respective defining labels. The above steps may be illustrated for an exemplary universal rule *mI(A,B)=(I1(A,C),I2(C,B))* and an exemplary knowledge graph consisting in the triples *l1(a,c), l2(c,b), l3(b,d), l2(d,e).*

First, all triples having a label *l1* or 12 are fetched, namely *l1(a,c), l2(c,b), l2(d,e).* The defining labels require that the object of *l1* be the subject of *l2*, as indicated by the use of the same concept variable *C*. Accordingly, only the triples *l1(a,c), l2(c,b)* are selected, since the triple *l2(d,e)* is not linked to any other label. Finally, the concepts a and b are substituted in the main label, namely generating the triple *ml(a,b)* as supplementary data. The knowledge graph may then be updated by creating a new edge *ml* connecting the nodes of the concepts *a* and *b*.

In another example, for universal rule *L(Y, Z):=(l2(W,Z), L(Y,W)),* all the triples in the knowledge graph are fetched, since all labels match an undefined label variable. The only condition of the defining label variable is that its object be the subject of *l2*, and the only triples that satisfy this condition are *l3(b,d)* and *l2(d,e).* Accordingly, in the last step, *L* is replaced with 13 and *Y,Z* are replaced with *b* and *e*, respectively. The knowledge graph may then be updated by creating a new edge *l3* connecting the nodes of the concepts b and e.

Thus, the knowledge graph may be enriched by means of the universal rules. The generation of supplementary data may be performed only once for each knowledge graph, in particular before the knowledge graph is used for obtaining problem data.

Another aspect of the present invention relates to a computer program product. The computer program product comprises computer-readable instructions that, when loaded and run on a computer, cause the computer to perform the method according to the aspect and examples described above.

Yet another aspect of the present invention relates to a system as claimed.

In particular, the system may include a memory coupled to the processor. The memory may encode one or more programs to cause the processor to perform the method described in the application. In some examples, the system may comprise a plurality of processors.

To summarize, the subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 shows an example of a system including the system according to the present disclosure.
Figure 2 shows an exemplary functional block diagram of the exemplary system shown in Figure 1.
Figure 3 shows a schematic diagram representing an exemplary architecture of the exemplary system shown in Figure 1.
Figure 4 shows an exemplary knowledge graph.
Figure 5 shows a flowchart of an exemplary method according to the present disclosure.
Figure 6 shows an exemplary knowledge graph used for evaluating an exemplary rule.
Figure 7 shows a flowchart of exemplary details of the method shown in Figure 5.
Figure 8 shows an exemplary task distribution in the exemplary system shown in Figure 2.
Figure 9 shows an exemplary knowledge graph queried to obtain problem data and solution data.
Figure 10 shows an exemplary hardware configuration of a computer that may be used to implement at least a part of the system described herein.

### Detailed Description

In the following, a detailed description of examples will be given with reference to the drawings. It should be understood that various modifications to the examples may be made. Unless explicitly indicated otherwise, elements of one example may be combined and used in other examples to form new examples.

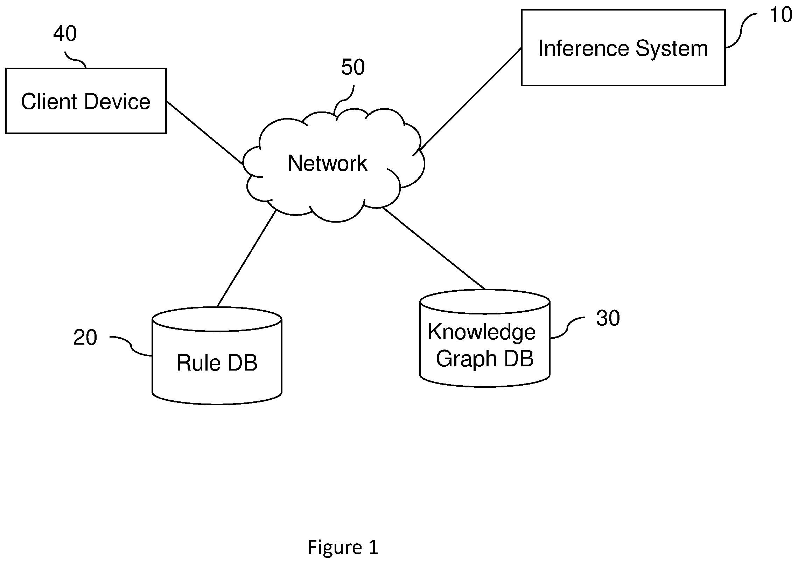

**Fig. 1** shows an example of a system including the system according to the present disclosure.

The exemplary system shown in Fig. 1 comprises an inference system 10, a rule database (DB) 20, a knowledge graph DB 30 and a client device 40, which are connected via a network 50. The network 50 may include the Internet and/or one or more intranets. Further, at least part of the network 50 may be implemented by a wireless network (e.g. wireless local area network (WLAN), cellular network, etc.).

The client device 40 may be implemented by a computer such as a personal computer. In some examples, the client device 40 may be a mobile device such as mobile phone (e.g. smartphone), a tablet computer, a laptop computer, a personal digital assistant (PDA), etc. It should be noted that, although Fig. 1 shows only one client device 40, more than one client device 40 may be connected to the network 50.

The inference system 10 is configured to receive, from the client device 40, trigger data including at least one trigger concept. The trigger data comprise information about a trigger event, which may be an action performed at the client device 40, by a user interacting with the client device 40 and/or by the client device 40 itself, or a change in the state of the client device 40.

The inference system 10 is configured to retrieve rules from the rule DB 20 and, possibly, to store rules in the rule DB 20. The rule DB 20 is a database configured to store rules, e.g. written in a domain-specific language (DSL) such as Datalog. The rules are retrieved from the rule DB 20 based on the trigger data, as explained in more detail below.

The rules stored in the rule DB 20 represent a plurality of relations and may relate to any kind of field or topic. In some examples, however, the rules stored in the rule DB 20 may be pertinent to a specific field. For instance, the rule DB 20 may store rules related to e-commerce or to device troubleshooting.

A rule comprises a main label and a concatenated set of defining labels. The main label expresses a relation between two concept variables, wherein this relation can be defined by referring to other labels, the defining labels. Further, a rule may comprise one or more tags, wherein a tag may comprise information about a context of an event and/or a field of application for the rule, or about an attribute for a concept, a label or a variable, or a prescription on how to use the rule when querying. For example, a rule may be expressed in Datalog as *(mainlabel:X:Y)* : - *(tag, label1:X:Z, label2:Z:Y),* wherein the tag is optional.

The labels in a rule relate concept variables and not concepts, meaning that the concepts are not specified. Accordingly, labels in a rule take concept variables as "arguments" and each concept variable is configured to be initialized to a concept. In some examples, also the labels in a rule may be label variables, i.e. not specified at the onset and configured to take a label as "value". Concepts (and, possibly, labels) may be fed to rules by, e.g., querying one or more knowledge graphs.

Indeed, the inference system 10 is configured to query knowledge graphs from the knowledge graph DB 30 and the inference system 10 may insert information in the knowledge graph DB 30. The knowledge graph DB 30 is a database configured to store knowledge graphs, e.g. constructed in a DSL such as Datalog. A knowledge graph comprises a plurality of nodes and a plurality of edges, each edge being associated with a respective label. Accordingly, a knowledge graph is a directed graph in which each edge has a direction from the subject to the object.

Each node is associated with a concept, which can be either a subject or an object depending on the edge(s) connected to that node. Thus, a knowledge graph comprises triples of the form: subject → label → object. In Datalog the triples *l(s,o)* may be represented as records in the format *label:subject:object.* For example, a relation/label that expresses that the concept "mammal" is a specification of the concept "animal" may be: *isA:mammal:animal.*

The knowledge graph DB 30 may contain the knowledge graphs stored as files in one of several possible formats (e.g. Resource Description Framework - RDF or Web Ontology Language - OWL) or it may rely on a graph database management system (e.g. Neo4j, Ontotext GraphDB etc.). When a knowledge graph is provided as a file, a processor may simply load the content in memory, while, if the knowledge graph is backed by a graph database management system, the database engine may have to use a specific DB driver in order to perform queries and/or store new data.

The source for the information contained in the knowledge graphs may fall under any of the following categories or a combination thereof: open source (e.g. ConceptNet, DBPedia, WikiData), commercially licensed (Diffbot), self-extracted from raw corpora (e.g. specific for industrial/legal domains). The knowledge graphs stored in the knowledge graph DB 30 may relate to any kind of field/topic. In some examples, however, the knowledge graphs may be pertinent to a specific field. For instance, the knowledge graph DB 30 may store information related to specific kind of products (e.g., cameras, books, etc.) in case the field is e-commerce or may store information about the software and hardware components of a device in case the field is device troubleshooting.

Non-exhaustive examples of basic labels that may be used as defining labels for the rules and that may be associated to edges in the knowledge graphs are:
1. antonym: opposite meaning (e.g. antonym:black:white)
2. synonym: similar meaning (e.g. synonym:beginning:start)
3. isA: the object extends the subject (e.g. isA:human:animal)
4. hasProperty: the subject has the property indicated as object (e.g. hasProperty:sky:blue)
5. causes: the subject is a direct cause of the object (e.g. causes:fire:heat)
6. desires: the subject desires the object (e.g. desires:child:toy)
7. partOf: the subject is a part of the object (e.g. partOf:battery:smartphone)
8. implies: the subject is related to the object (e.g. implies:winter:cold)
9. requires: the object is required by the subject (e.g. requires:plant:sunlight)

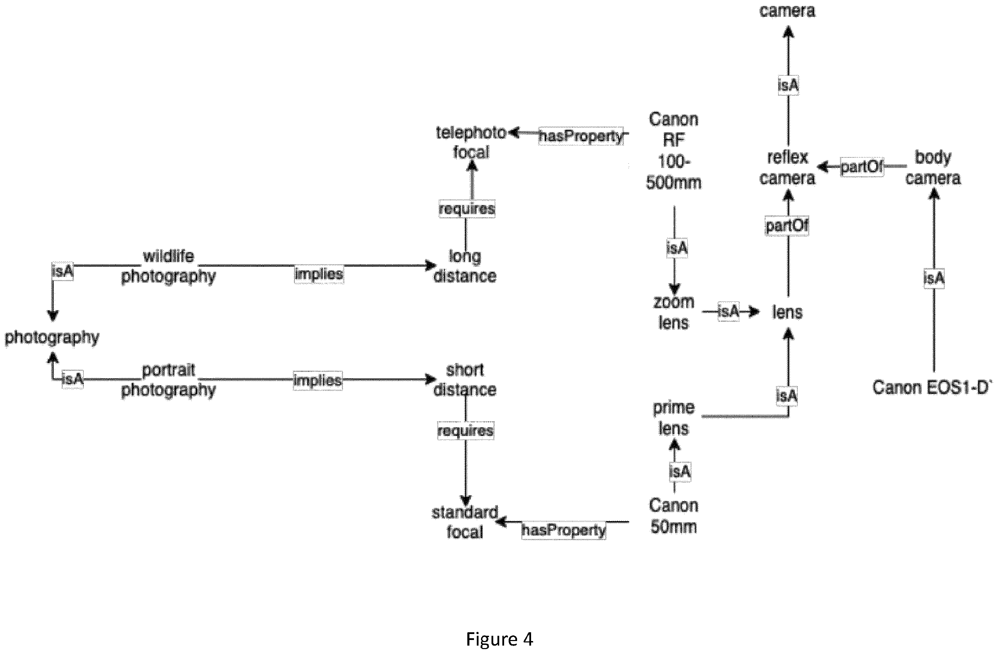

**Fig. 4** shows an exemplary knowledge graph in which the labels "isA", "implies", "requires" and "hasProperty" can be seen. In particular, this knowledge graph contains information in the field of photography.

Non-exhaustive examples of universal rules that may be defined using the basic labels as defining label are:
*1. prevents*
   *(prevents:X:Y) :- (causes:Z:Y, antonym:X:Z)*
   *(prevents:X:Y)* :- *(antonymZ:Y, causes:X:Z)*
   *(prevents:Y:X)* :- *(requires:X:Z, antonym:Z:Y)*
   E.g.: if "lack of study" causes "ignorance" and "learning" is the opposite of "lack of study", then "learning" prevents "ignorance".
*2. correlates*
   *(correlates:X:Y)* :- *(causes:Z:X, causes:Z:Y, X<>Y)*
   *(correlates:X:Y)* :- *(implies:X:Z, requiresZ:Y, X<>Y)*
   The symbol <> indicates that *X* and *Y* can be exchanged, namely *X* can be the subject or the object. It is a relation that mildly co-relates two concepts.
3. inheritance from "isA"
   *(L:X:Z):-(isA:X:S1, L:S1:Z, X<>S1, not(antonym:Y:Z, L:X:Y))*
   In this rule the main label is a label variable, *L*, that corresponds to one of the defining labels, also a label variable. This rule lets the relations of a concept be inherited by its extensions, unless the extension has a relation opposite to the one of its parent. For example, *L:S1:Z* may be *hasProperty:bird:can fly* and *L:X:Y* may be *hasProperty:penguin:stay on the ground.* Since "stay on the ground" is antonym to "can fly", this rule cannot propagate the bird's property "can fly" to the penguin.
4. inheritance from "synonym"
   *(L:Y:Z) :- (L:W:Z, synonym:W:Y)*
   If *Y* has a relation with *Z*, and *Y* is synonym with *W, W* has a relation with *C* as well.
5. *relatedTo*
   *(relatedTo:Y:X) :- (hasProperty:X:Y)*
   It is a weak relation that generalizes the hasProperty relation.
6. symmetry
   Some relations are symmetric with respect to their concepts. The attribute *symmetric* may be defined for these relations, *symmetric:(antonym, synonym, relatedTo).* Accordingly, a relation may be reversed if it has the symmetric attribute:
   *(L:X:Y) :- (symmetric:L, L:Y:X).*
7. transitivity
   Some relations have the transitivity property. The attribute *transitive* may be defined for these relations, *transitive:(isA, causes, requires).* Accordingly, a relation may be propagated if it has the transitive attribute:
   *(L:X:Y) :- (transitive:L, L:X:Z, L:Z:Y).*

The universal rules may be used to enrich the information in a knowledge graph. Further, as mentioned, one or more knowledge graphs are queried using (specific) rules to obtain problem data and, in turn, solution data based thereon, as will be described in more detail below. The inference system 10 is configured to perform an action based on the solution data, which may comprise interacting with the client device 40 over the network 50, as also described below.

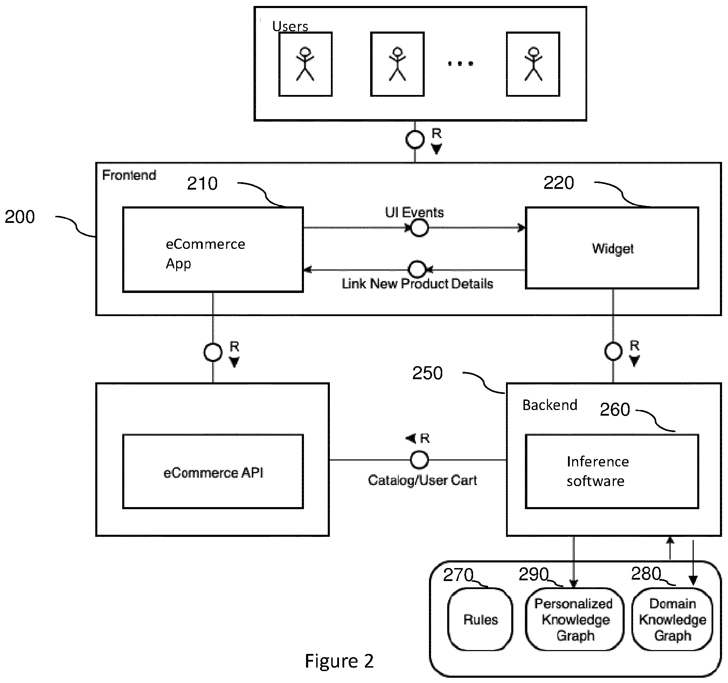

**Fig. 2** shows an exemplary functional block diagram of the exemplary system shown in Fig. 1, specifically for the field of e-commerce. One or more users (or consumers) interact with a frontend 200, which may be at the client device 40. In particular, the frontend may comprise a web application 210 running in a browser on the client device 40 (e.g. JavaScript single page app) or an iOS/Android app 210 on the client device 40. Further, the frontend may comprise a web widget 220 plugged into specific pages, e.g. as an iframe or JavaScript file executed and rendered in the same page. The web application 210 may communicate data about events occurring in the user interaction to the web widget 220, in particular trigger data about trigger events.

The web widget 220 may be configured to communicate with the inference system 10, which may host the backend 250. In particular, the widget may communicate with a piece of software, the inference software 260, as specified in in an application programming interface (API), in particular a web service. An API is a software interface that allows two applications (in this case the web widget 220 and the inference software 260) to interact with each other without any user intervention. A web service is an API for cases in which the interaction between the two applications involves communication over a network. An example of a web service is a RESTful API, i.e. a web service that complies with the constraints set by REST, wherein REST stands for representation state transfer and it is a software architectural style. The backend 250 may rely e.g. on Google Kubernetes (K8S) Engine.

The inference software 260 evaluates rules 270 by using one or more knowledge graphs 280, 290, e.g. a domain knowledge graph 280 (or domain specific knowledge graph) and a personalized knowledge graph 290. The domain knowledge graph 280 may contain facts regarding the field or domain of e-commerce, in particular of a specific e-store, e.g. a photography e-store, and may be built from a product catalogue of the e-store. The personalized knowledge graph 290 may contain facts regarding the user, such as preferences, previous choices and so on. If the user is registered, the data in the personalized knowledge graph are persisted. If not, the data may be volatile or may be stored in a persistence storage so that, in case the user registers themselves, the data are not lost.

The inference software 260 may further communicate with the application 210 according to an eCommerce API, in particular to access a product catalogue and/or a user cart.

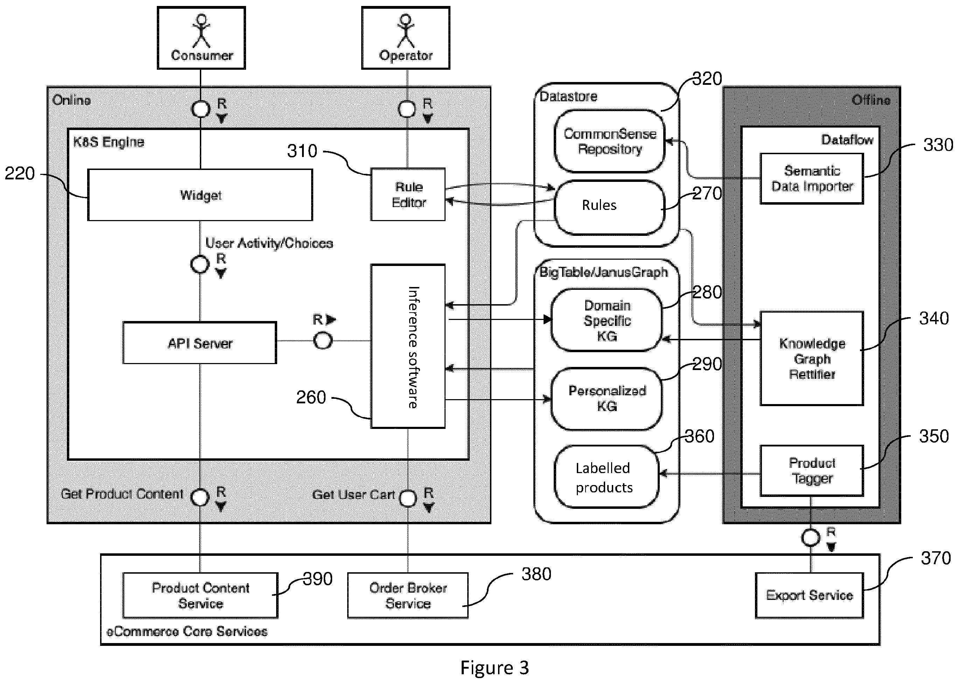

**Fig. 3** shows a schematic diagram representing an exemplary architecture of the exemplary system shown in Figure 1. In particular, Fig. 3 shows some elements of Fig. 2 (such as the widget 220 and the inference software 260) in a larger context. While common users (or consumers) interact with the widget 220, the architecture may comprise a rule editor 310, e.g. an online web application, for editing the rules that will be evaluated, wherein a qualified user (or operator) may use the rule editor 310. The rules 270 are stored in the datastore together with a CommonSense repository 320, which may comprise a collection of labels.

The labels may be provided by a semantic data importer 330, which may collect data from public knowledge graphs such as wikidata and ConceptNet. The architecture may further comprise a knowledge graph rectifier 340 which may be configured to evaluate universal rules in order to enrich the knowledge graphs. A product tagger 350 may be configured to associate attributes and labels to products in a catalogue (e.g. by extracting them from the product's description), which may be then used to create the knowledge graphs. Accordingly, together with the knowledge graphs 280 and 290, a plurality of labelled products 360, i.e. labels and/or attributes related to specific products, may be stored.

The semantic data importer 330, the knowledge graph rectifier 340 and the product tagger 350 may perform their operations offline, meaning that they are not used while serving a user request, but rather in preparation for it, generating data that are subsequently used for online queries.

The product tagger 350 may obtain data about products in the catalogue from an export service 370 (e.g. SAP Upscale). Other services provided in the context of e-commerce may an order broker service 380, which may be used by the inference software 260 for accessing a consumer's cart, and a product content service 390, which may be used for retrieving products' images, text and attributes to be displayed in the widget 220. As already discussed above, an API server may expose the REST endpoints against which the widget 220 will perform calls.

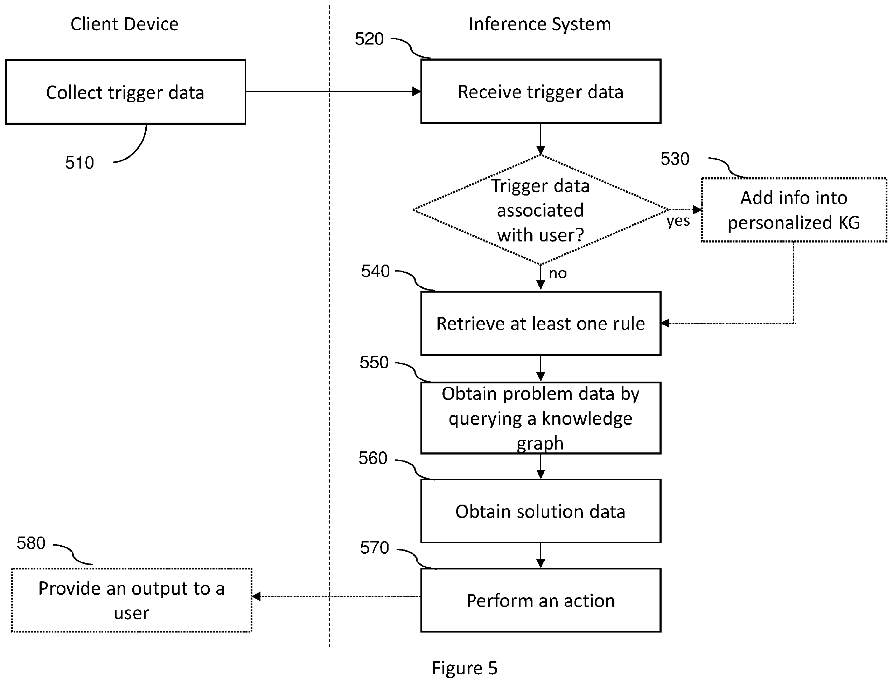

**Fig. 5** shows a flowchart of an exemplary method according to the present disclosure. The steps of the method are exemplary divided between a client device 40 and an inference system 10 such as the ones described with reference to Fig. 1. At 510, the client device 40 collects trigger data from an interaction between the user and the client device 40, wherein the interaction may comprise one or more events. The user activity on the client device 40 may include an interaction with a user interface, such as any one of clicking, tapping, touching, swiping, typing and hovering or combinations thereof.

One or more features of the event(s) may be tracked/collected by the client device 40 and may be analysed to determine whether an event is a trigger event, namely whether the data relating to the event should be sent to the inference system 10. These features may include a timestamp of the event, an identification of the user, an identification of the entity the user is interacting with and so on. The determination of whether an event is a trigger event may be done on the basis of predetermined criteria, stored e.g. in a look-up table.

If an event is a trigger event, the collected data about the features of the event are trigger data that are sent to the inference system 10. In particular, the trigger data comprise at least one trigger concept, which may be related to any of the event features, e.g. an identification of an item, displayed among a plurality of items, on which the user clicked.

The trigger data are received at 520 by the inference system 10. Optionally, the inference system 10 may check whether the trigger data are associated to a particular user, e.g. whether the trigger data comprise a user ID such as a username or email address. If the trigger data are indeed associated to a particular user, at least part of the trigger data may be inserted as new facts in a personalized knowledge graph 290. In some examples, the personalized knowledge graph 290 may already exist and in other examples it may be created. The trigger data may be converted in the form of relations between concepts e.g. by algorithms for entity extractions, if it is not already in that form.

If the trigger data are not associated to a particular user or if this check is skipped, the method proceeds to retrieving at least one rule based on the trigger data at 540. The at least one rule is retrieved from the rule DB 20 and may be selected among a plurality of available rules depending on the trigger data. For example, the trigger data may comprise a tag and each rule may be associated with one or more tags and, if at least one tag matches a piece of trigger data, that rule may be retrieved.

There may further be universal rules that are considered to be generally applicable and, thus, may be retrieved in any case, i.e. independently from the trigger data. In other examples, such universal rules may not be retrieved at this stage, but may be evaluated upfront, e.g. offline, using the knowledge graph(s). In the following, the focus is on the (specific) rules retrieved based on the trigger data, unless specified otherwise or unless it is clear from the context that the same applies for the universal rules.

After the one or more rules have been retrieved based on the trigger data, problem data are obtained by querying one or more knowledge graphs using the rule(s) and the at least one trigger concept at 550. The inference system 10 accesses the knowledge graph(s) from the knowledge graph DB 30 and it may select which knowledge graph to query based on the at least one trigger concept such that at least one node of the knowledge graph is associated with the at least one trigger concept. If there are more trigger concepts, the knowledge graph may have a single node associated with one of the trigger concepts or multiple nodes associated with respective multiple trigger concepts.

The problem data are obtained by evaluating the rule(s) using the one or more knowledge graphs from the knowledge graph DB 30. In particular, since a rule comprises labels relating two concept variables, a rule may be utilized as a query by assigning one trigger concept to one of the concept variables and requesting then to retrieve a concept linked to the trigger concept by the given label(s). The query may be derived from the main label or from the defining labels of the rule.

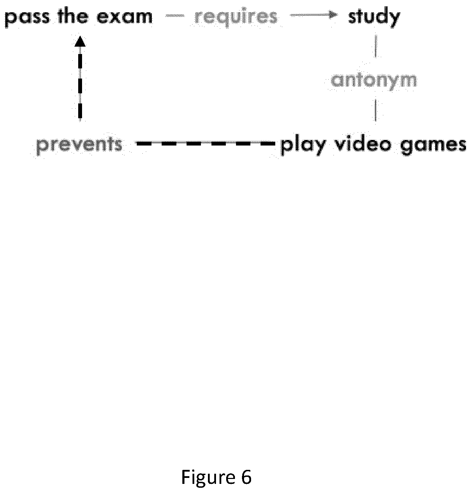

An exemplary rule evaluation of the rule *(prevents:Y:X) :- (wish:X, requires:X:Z, antonym:Z:Y)* may be illustrated with reference to Fig. 6. For this rule, *prevents* is the main label while *requires* and *antonym* are the defining labels. For instance, the trigger concept may be "pass the exam" and may be associated with the attribute *wish* in the trigger data and the knowledge graph may comprise the facts *requires:pass the exam:study* and *antonym:study:play video games,* as shown in Fig. 6.

The method may comprise first checking whether there is an edge in the knowledge graph associated with the main label and connected to the node associated with the trigger node. Specifically, it may be checked whether there is a match for *prevents:?:pass the exam.* The knowledge graph under consideration does not contain any triple that may satisfy the query.

Thus, a path may be traced in the knowledge graph starting from the node associated with the trigger concept by using the concatenated set of defining labels. In other words, the triple matching *requires:pass the exam:?* is fetched first, thereby assigning the concept "study" to the concept variable Z. Then, it is checked whether a match for *antonym:study:?* is present in the knowledge graph, which leads to assigning the concept "play video games" to the concept variable *Y*.

Hence, the concept associated with the last node of the path, which is the concept related to the trigger concept by the main label, is retrieved, namely *play video games.* By variable substitution, the new triple *prevents:play video games:pass the exam* is inferred. The knowledge graph may be updated by inserting an edge associated with this new relation, as shown by the dashed arrow in Fig. 6.

Hence, should this rule be evaluated once again in the future against this knowledge graph, the query using the main label would be successful and the concept *play video games* may be directly retrieved as being related to *pass the exam by prevents.*

The retrieved concept and/or the whole fact comprising the retrieved concept, the main label and the trigger concept, may constitute the problem data. If there are a plurality of trigger concepts in the trigger data, the procedure may be repeated for each trigger concept. In some examples, more knowledge graphs may be queried, e.g. the domain knowledge graph 280 and the personalized knowledge graph 290, and each may provide concepts/facts.

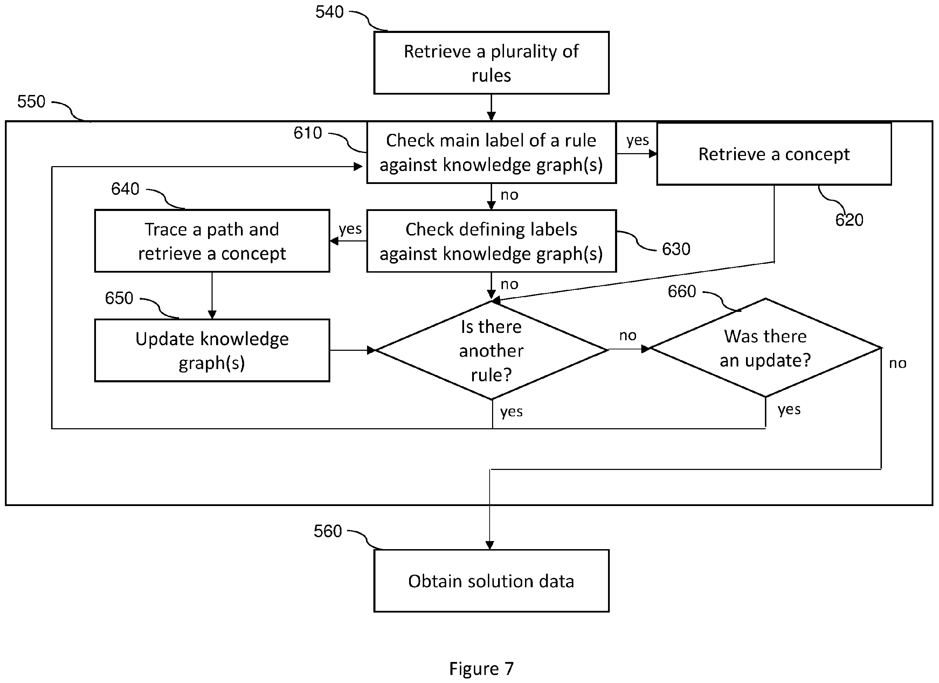

If a plurality of rules are retrieved at 540, the above-described procedure may be performed once for each rule, e.g. in parallel or in sequence. In another example, the rules may be evaluated in a sequence, which may potentially be performed more than once, as shown in **Fig. 7****.** In particular, a rule may be taken out of the plurality of retrieved rules and at 610 its main label may be checked against the knowledge graph as discussed above, and, if there is a match, a concept may be retrieved at 620. Otherwise, the concatenated set of defining labels may be checked against the knowledge graph at 630 and, if there are adjacent edges that mirror the defining labels, as described above, a path can be traced to retrieve a concept at 640 and the knowledge graph can be correspondingly updated at 650. After retrieving the concept at 620 or after updating the knowledge graph at 650 or if neither the main label nor the defining labels are matched in the knowledge graph, the method moves on to the next rule in the plurality of rules, starting again at 610.

This procedure (also referred to as "inference step") is repeated for each rule, one after the other. Once the inference step has been performed for all rules, at 660 it is determined whether the knowledge graph was updated at any point, i.e. whether the steps 640-650 were performed for at least one rule of the plurality of rules. If the knowledge graph was updated, the plurality of inference steps are performed again, starting at 610. The iteration stops once no new facts have been generated from the previous run, so that step 550 is concluded.

Returning to Fig. 5, at 560 solution data are obtained based on the problem data, e.g. by evaluating a solution rule using the knowledge graph, so that a concept representing the solution (or "solution concept") may be retrieved.

Finally, at 570, an action is performed based on the solution data, wherein the action performed by the inference system 10 may be reflected in an operation 580 at the client device 40, such as providing an output to a user.

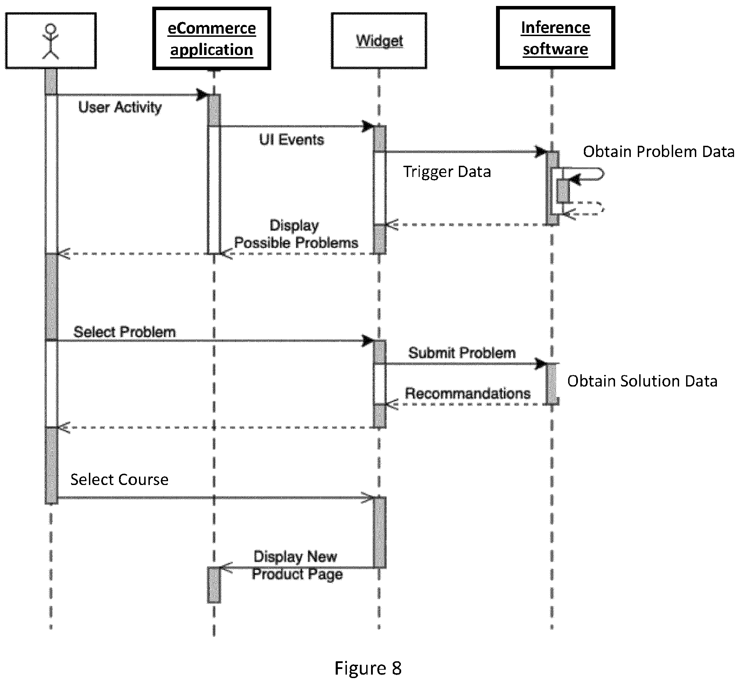

An illustrative example of the method of Fig. 5 will be described with reference to **Fig. 8****,** which also shows an exemplary task distribution in the exemplary system shown in Figure 2. A user interacts with the frontend 200, in particular with the eCommerce application 210 (e.g. a web page of an e-commerce website in a browser) equipped with the web widget 220. The user hovers over the "buy" button on the web page, which relates to a camera, Canon E0S-1D. The web widget 220 collects data about the events in the user activity and assigns this particular hovering event a contextual feature, "reluctancy", which is derived from the non-occurrence of a click on the "buy" button within a predetermined amount of time.

The web widget 220 determines that the event is a trigger event in view of the contextual feature "reluctancy" and sends trigger data to the inference software 260, wherein the trigger data comprise the trigger concept "Canon E0S-1D" associated with an attribute *details* and a context tag *context:reluctancy.*

The inference software 260 receives the trigger data and retrieves two rules based on the trigger data, in particular on the tag, wherein the rules are
rule1: (*problem1:X:P*) :- *(context:reluctancy, details:X, relatedTo:X:S, desires:S1:S, requires:S1:S2, antonym:S2:P)* and
rule2: (*problem2:X:P*) :- (*context:reluctancy, details:X, relatedTo:X:S, desires:S1:S, desires:S1:52, antonym:S2:P)*

Further, the inference software 260 may retrieve universal rules such as the ones discussed above.

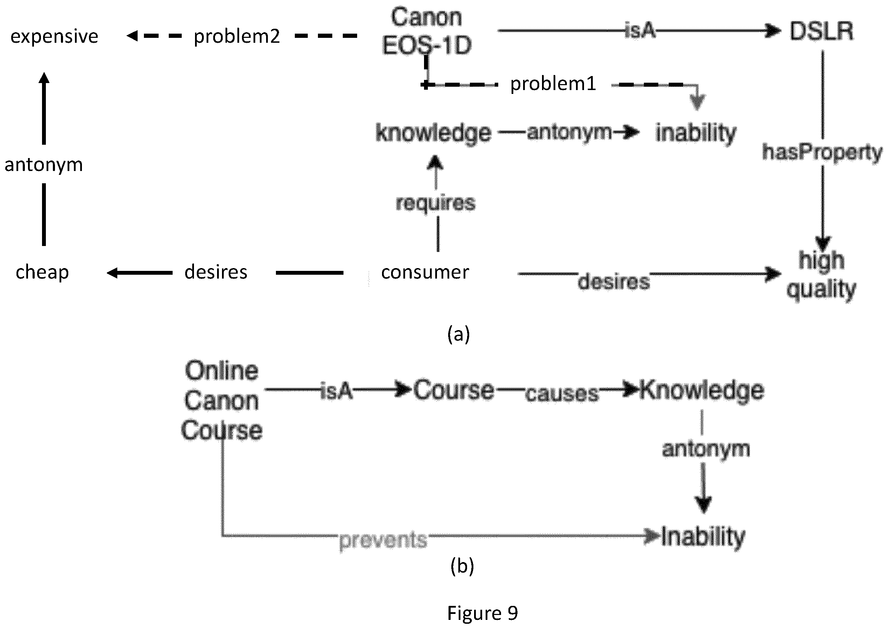

The inference software 260 obtains problem data by querying a knowledge graph, part of which is shown in **Fig. 9(a)****.** The universal rules may introduce two edges associated with *relatedTo* (not shown). Then, rule1 may be evaluated by tracing a path from the node "Canon E0s-1D" to the concept "inability". Similarly, rule2 may be evaluated by tracing a path from the node "Canon E0s-1D" to the concept "expensive". Accordingly, problem data comprising the concepts "inability" and "expensive" are obtained.

The inference software 260 sends the problem data to the web widget 220, so that the web widget displays the two choices to the user. For example, the inference software 260 may associate a user-intelligible question to each problem concept, e.g. shown in the form of two buttons "anything cheaper?" and "how to use it?" superimposed on the web page of the product Canon E0s-1D. After the user chooses a problem, e.g. by clicking on the button "how to use it?", the web widget 220 forwards the choice to the inference software 260.

Based on the (chosen part of the) problem data, namely "inability", the inference software 260 obtains solution data by querying the knowledge graph using the solution rule (*recommend:X:S*) :- (*details:X, problem*:X:P, prevents:S:P*) with *P* initialized to "inability" and Xto "Canon E0s-1D" on the basis of the trigger data. Another part of the knowledge graph is shown in **Fig. 9(b)****,** wherein the two parts are shown separately for clarity of presentation. The edge associated with *prevents* may had been obtained when evaluating the universal rules.

The solution concept "Online Canon Course" is retrieved as solution data and the inference software 260 performs an action based thereon, namely sending it as a recommendation to the web widget 220, which provides the recommendation to the user, e.g. again in the form of a clickable button. If the user clicks on the button, the web page relative to the Online Canon Course is displayed.

If the problem concept "expensive" had been chosen, the solution concept may have been an alternative product, which is recommended to the user, and the new product page may be consequently displayed.

Another exemplary case may involve avoiding that the user purchases a product, which needs one or more accessories to be actually used, without the necessary accessories. The trigger event may be that a product is added to the cart, so that the trigger event may comprise the concept of the product, e.g. "Canon E0s-1D", with the attribute *cart.* Based on this attribute, the following rule may be retrieved
*(missingpart:X:T) :- (cart:Y, partOf:Y:T, partOf:X:T, not(cart:X)),*
and, by querying the knowledge graph shown in **Fig. 4** using this rule and the transitivity of *isA,* the problem concepts "Canon RF 100-500mm" and "Canon 50mm" may be retrieved.

In one example, the solution data may be identical to the problem data and the user may be provided with a choice between the two lenses. In another example, the solution data may be obtained from the problem data and be related to the use of the two lenses. For instance, the following solution rule may be evaluated twice using the knowledge graph of Fig. 4
*(purpose:Z:P) :- (hasProperty:Z:S, requires:S1:S, implies:P:S1),*
with *Z* set to "Canon RF 100-500mm" and "Canon 50mm" in order to obtain two solution concepts, "wildlife photography" and "portrait photography", that may be presented as two options to the user in order to assist them in deciding which lens to buy. Once the user has decided, a follow-up action may be directing the user to the web page of the appropriate lens.

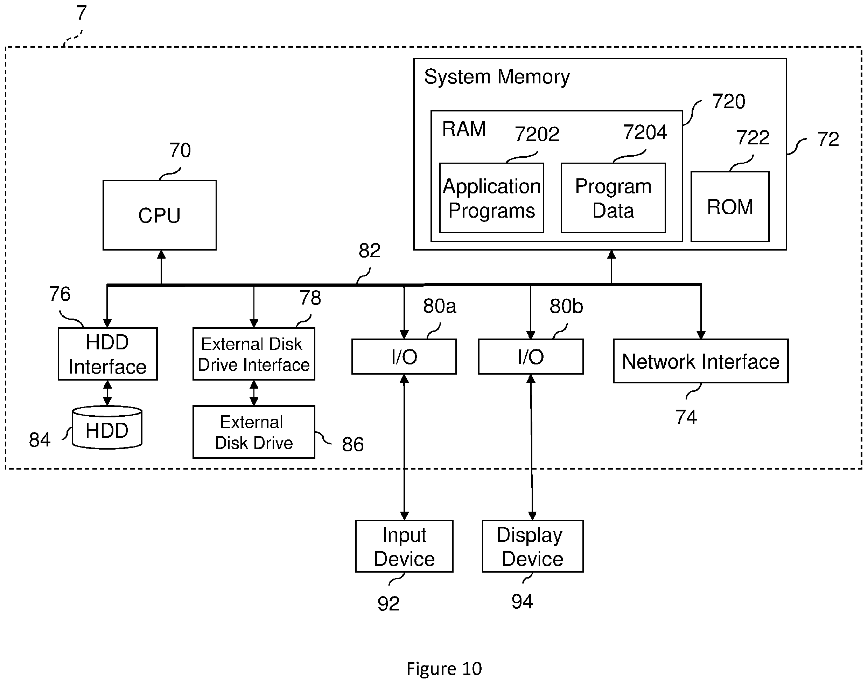

**Fig. 10** shows an exemplary hardware configuration of a computer that may be used to implement at least a part of the system described herein.

In particular, the exemplary hardware configuration may be used to implement the inference system 10 and/or the client device 50. The computer 7 shown in Fig. 10 includes a CPU 70, a system memory 72, a network interface 74, a hard disk drive (HDD) interface 76, an external disk drive interface 78 and input/output (I/O) interfaces 80. These components of the computer are coupled to each other via a system bus 82. The CPU 70 may perform arithmetic, logic and/or control operations by accessing the system memory 72. The CPU 70 may implement the processors of the exemplary devices and/or system described above. The system memory 72 may store information and/or instructions for use in combination with the CPU 70. The system memory 72 may include volatile and non-volatile memory, such as a random access memory (RAM) 720 and a read only memory (ROM) 722. A basic input/output system (BIOS) containing the basic routines that helps to transfer information between elements within the computer 7, such as during start-up, may be stored in the ROM 722. The system bus 82 may be any of several types of bus structures including a memory bus or memory controller, a peripheral bus, and a local bus using any of a variety of bus architectures.

The computer may include a network interface 74 for communicating with other computers and/or devices via a network.

Further, the computer may include a hard disk drive (HDD) 84 for reading from and writing to a hard disk (not shown), and an external disk drive 86 for reading from or writing to a removable disk (not shown). The removable disk may be a magnetic disk for a magnetic disk drive or an optical disk such as a CD ROM for an optical disk drive. The HDD 84 and the external disk drive 86 are connected to the system bus 82 by a HDD interface 76 and an external disk drive interface 78, respectively. The drives and their associated computer-readable media provide non-volatile storage of computer-readable instructions, data structures, program modules and other data for the general purpose computer. The data structures may include relevant data for the implementation of the method for collecting and/or retrieving information relating to objects, as described herein. The relevant data may be organized in a database, for example a relational or object database.

Although the exemplary environment described herein employs a hard disk (not shown) and an external disk (not shown), it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 722 or RAM 720, including an operating system (not shown), one or more application programs 7202, other program modules (not shown), and program data 7204. The application programs may include at least a part of the functionality as described above.

The computer 7 may be connected to an input device 92 such as mouse and/or keyboard and a display device 94 such as liquid crystal display, via corresponding I/O interfaces 80a and 80b as well as the system bus 82. In case the computer 7 is implemented as a tablet computer, for example, a touch panel that displays information and that receives input may be connected to the computer 7 via a corresponding I/O interface and the system bus 82. Further, in some examples, although not shown in Fig. 10, the computer 7 may further be connected to a printer and/or an imaging device such as a camera, via corresponding I/O interfaces and the system bus 82.

In addition or as an alternative to an implementation using a computer 7 as shown in Fig. 10, a part or all of the functionality of the exemplary embodiments described herein may be implemented as one or more hardware circuits. Examples of such hardware circuits may include but are not limited to: Large Scale Integration (LSI), Reduced Instruction Set Circuits (RISC), Application Specific Integrated Circuit (ASIC) and Field Programmable Gate Array (FPGA).

## Claims

1. A computer-implemented method comprising:
- receiving (520) trigger data comprising at least one trigger concept, wherein:
the trigger data comprise information about a trigger event, the trigger event being an event that automatically triggers execution of the computer-implemented method, and wherein the trigger concept is a feature of the trigger event or part of a feature of the trigger event;
- retrieving (540) at least one rule based on the trigger data, wherein the at least one rule is associated with one or more tags and at least one tag matches a piece of the trigger data, and wherein a rule comprises:
-- a main label relating two concept variables, wherein each concept variable is configured to be initialized to a concept;
-- a concatenated set of defining labels, each defining label relating two concept variables;
- obtaining (550) problem data by querying a knowledge graph using the at least one rule and the at least one trigger concept, wherein the problem data comprise information about a problem, wherein:
the knowledge graph comprises a plurality of nodes and a plurality of edges, each node being associated with a respective concept and each edge being associated with a respective label,
at least one node is associated with the at least one trigger concept;
the knowledge graph is chosen among a plurality of knowledge graphs based on the trigger data; and
querying the knowledge graph using the at least one rule and the trigger concept comprises assigning one or more concepts from the knowledge graph to the concept variables of the labels in the rule;
- obtaining (560) solution data based on the problem data, wherein the solution data comprise information about a solution to the problem identified by the problem data and wherein obtaining the solution data comprises:
-- feeding the problem data to an artificial intelligence system that has been trained to provide the solution data as output; or
-- checking the problem data against a database containing associations between problem data and respective solution data;
- performing (570) an action based on the solution data, wherein performing the action solves in a direct or indirect manner the problem identified by the problem data;
wherein the trigger concept is a smartphone battery, the trigger event is a drop in a charge level of the smartphone battery and the information about the trigger event comprises model and manufacturer of the smartphone or of the smartphone battery, the problem data comprises a concept indicating an app, the solution data comprise an alternative app for the same purpose as the app, the alternative app consuming less energy than the app, and the action comprises uninstalling the app and installing the alternative app; and
wherein querying the knowledge graph using the at least one rule and the at least one trigger concept comprises:
-- checking whether the main label of the at least one rule is associated with any edge of the knowledge graph connected to the node associated with the at least one trigger concept;
-- if so, retrieving as the problem data the concept associated with the other node connected to the edge associated with the main label;
-- if not:
--- tracing a path in the knowledge graph starting from the node associated with the at least one trigger concept by using the concatenated set of defining labels, thereby retrieving as the problem data the concept associated with the last node of the path;
--- updating the knowledge graph by inserting an edge associated with the main label that connects the node associated with the at least one trigger concept and the last node of the path.

2. The computer-implemented method of claim 1, wherein retrieving the at least one rule comprises retrieving a plurality of rules and obtaining the problem data comprises:
- performing a plurality of inference steps for the plurality of rules in sequence, each inference step comprising, for a respective rule:
-- checking (610) whether the main label of the respective rule is associated with any edge of the knowledge graph connected to the node associated with the at least one trigger concept;
-- if so, retrieving (620) the concept associated with the other node connected to the edge associated with the main label;
-- if not:
--- checking (630) whether the concatenated set of defining labels is associated with at least a subset of adjacent edges of the knowledge graph connected to the node associated with the at least one trigger concept;
--- if so:
---- tracing (640) a path in the knowledge graph starting from the node associated with the at least one trigger concept by using the concatenated set of defining labels, thereby retrieving the concept associated with the last node of the path;
---- updating (650) the knowledge graph by inserting an edge associated with the main label that connects the node associated with the at least one trigger concept and the last node of the path;
--- if not, directly proceeding to a subsequent inference step, if any is left;
- once the plurality of inference steps have been performed, determining (660) whether the knowledge graph was updated;
- if the knowledge graph was updated, re-performing the plurality of inference steps for the plurality of rules in sequence.

3. The computer-implemented method of any one of the preceding claims, further comprising obtaining additional problem data by querying an additional knowledge graph using the at least one rule and the at least one trigger concept, wherein the solution data are obtained further based on the additional problem data.

4. A computer program product comprising computer-readable instructions that, when loaded and run on a computer, cause the computer to perform the method according to any one of claims 1 to 3.

5. A system comprising:
a knowledge graph database configured to store knowledge graphs, wherein a knowledge graph comprises a plurality of nodes and a plurality of edges, each node being associated with a respective concept and each edge being associated with a respective label;
a rule database configured to store rules, wherein a rule comprises:
- a main label relating two concept variables, wherein each concept variable is configured to be initialized to a concept;
- a concatenated set of defining labels, each defining label relating two concept variables;
a processor configured to:
- receive (520) trigger data comprising at least one trigger concept, wherein the trigger data comprise information about a trigger event, the trigger event being an event that automatically triggers execution of the computer-implemented method, and wherein the trigger concept is a feature of the trigger event or part of a feature of the trigger event;
- retrieve (540) at least one rule from the rule database based on the trigger data, wherein the at least one rule is associated with one or more tags and at least one tag matches a piece of the trigger data;
- obtain (550) problem data by querying a knowledge graph from the knowledge graph database using the at least one rule and the at least one trigger concept, wherein:
the problem data comprise information about a problem and wherein at least one node of the knowledge graph is associated with the at least one trigger concept,
the knowledge graph is chosen among a plurality of knowledge graphs based on the trigger data; and
querying the knowledge graph using the at least one rule and the trigger concept comprises assigning one or more concepts from the knowledge graph to the concept variables of the labels in the rule;
- obtain (560) solution data based on the problem data, wherein the solution data comprise information about a solution to the problem identified by the problem data and wherein, in order to obtain the solution data, the processor is configured to:
-- feed the problem data to an artificial intelligence system that has been trained to provide the solution data as output; or
-- check the problem data against a database containing associations between problem data and respective solution data;
- perform (570) an action based on the solution data, wherein performing the action solves in a direct or indirect manner the problem identified by the problem data, wherein the trigger concept is a smartphone battery, the trigger event is a drop in a charge level of the smartphone battery and the information about the trigger event comprises model and manufacturer of the smartphone or of the smartphone battery, the problem data comprises a concept indicating an app, the solution data comprise an alternative app for the same purpose as the app, the alternative app consuming less energy than the app, and the action comprises uninstalling the app and installing the alternative app; and
wherein querying the knowledge graph using the at least one rule and the at least one trigger concept comprises:
-- checking whether the main label of the at least one rule is associated with any edge of the knowledge graph connected to the node associated with the at least one trigger concept;
-- if so, retrieving as the problem data the concept associated with the other node connected to the edge associated with the main label;
-- if not:
--- tracing a path in the knowledge graph starting from the node associated with the at least one trigger concept by using the concatenated set of defining labels, thereby retrieving as the problem data the concept associated with the last node of the path;
--- updating the knowledge graph by inserting an edge associated with the main label that connects the node associated with the at least one trigger concept and the last node of the path.

6. The system of claim 5, wherein the processor is configured to retrieve a plurality of rules and, in order to obtain the problem data, the processor is further configured to:
- perform a plurality of inference steps for the plurality of rules in sequence, each inference step comprising, for a respective rule:
- - checking (610) whether the main label of the respective rule is associated with any edge of the knowledge graph connected to the node associated with the at least one trigger concept;
- - if so, retrieving (620) the concept associated with the other node connected to the edge associated with the main label;
- - if not:
--- checking (630) whether the concatenated set of defining labels is associated with at least a subset of adjacent edges of the knowledge graph connected to the node associated with the at least one trigger concept;
--- if so:
---- tracing (640) a path in the knowledge graph starting from the node associated with the at least one trigger concept by using the concatenated set of defining labels, thereby retrieving the concept associated with the last node of the path;
---- updating (650) the knowledge graph by inserting an edge associated with the main label that connects the node associated with the at least one trigger concept and the last node of the path;
--- if not, directly proceeding to a subsequent inference step, if any is left;
- once the plurality of inference steps have been performed, determine (660) whether the knowledge graph was updated;
- if the knowledge graph was updated, re-perform the plurality of inference steps for the plurality of rules in sequence.

7. The system of claim 5 or 6, wherein the processor is further configured to obtain additional problem data by querying an additional knowledge graph using the at least one rule and the at least one trigger concept, wherein the solution data are obtained further based on the additional problem data.

## Patentansprüche

1. Computerimplementiertes Verfahren, umfassend:
- Erhalten (520) von Auslöserdaten, die mindestens ein Auslöserkonzept umfassen, wobei:
die Auslöserdaten Informationen über ein Auslöserereignis umfassen, wobei das Auslöserereignis ein Ereignis ist, das die Ausführung des computerimplementierten Verfahrens automatisch auslöst, und wobei das Auslöserkonzept ein Merkmal des Auslöserereignisses oder Teil eines Merkmals des Auslöserereignisses ist;
- Abfragen (540) mindestens einer Regel auf der Basis der Auslöserdaten, wobei die mindestens eine Regel mit einem oder mehreren Tag(s) zusammenhängt und mindestens ein Tag mit einem Teil der Auslöserdaten übereinstimmt, und wobei eine Regel umfasst:
-- einen Hauptkennsatz, der zwei Konzeptvariablen in Beziehung bringt, wobei jede Konzeptvariable zum Initialisieren zu einem Konzept ausgebildet ist;
-- einen verknüpften Satz von Definitionskennsätzen, wobei jeder Definitionskennsatz zwei Konzeptvariablen in Beziehung bringt;
- Erhalten (550) von Problemdaten durch Abfragen eines Kenntnisgraphen unter Verwendung der mindestens einen Regel und des mindestens einen Auslöserkonzepts, wobei die Problemdaten Informationen über ein Problem umfassen, wobei:
der Kenntnisgraph eine Mehrzahl von Knoten und eine Mehrzahl von Kanten umfasst, wobei jeder Knoten mit einem jeweiligen Konzept zusammenhängt und jede Kante mit einem jeweiligen Kennsatz zusammenhängt,
mindestens ein Knoten mit dem mindestens einen Auslöserkonzept zusammenhängt;
der Kenntnisgraph aus einer Mehrzahl von Kenntnisgraphen auf der Basis der Auslöserdaten ausgewählt wird; und
das Abfragen des Kenntnisgraphen unter Verwendung der mindestens einen Regel und des Auslöserkonzepts das Zuordnen eines Konzepts oder mehrerer Konzepte von dem Kenntnisgraphen zu den Konzeptvariablen der Kennsätze in der Regel umfasst;
- Erhalten (560) von Lösungsdaten auf der Basis der Problemdaten, wobei die Lösungsdaten Informationen über eine Lösung des Problems umfassen, das durch die Problemdaten identifiziert worden ist und wobei das Erhalten der Lösungsdaten umfasst:
-- Zuführen der Problemdaten zu einem künstliche Intelligenz-System, das zum Bereitstellen der Lösungsdaten als Ausgabe trainiert worden ist; oder
-- Prüfen der Problemdaten bezüglich einer Datenbank, die Verknüpfungen zwischen Problemdaten und jeweiligen Lösungsdaten enthält;
- Durchführen (570) einer Aktion auf der Basis der Lösungsdaten, wobei das Durchführen der Aktion das Problem, das durch die Problemdaten identifiziert worden ist, in einer direkten oder indirekten Weise löst;
wobei das Auslöserkonzept eine Smartphone-Batterie ist, das Auslöserereignis ein Abfall eines Ladungsniveaus der Smartphone-Batterie ist und die Informationen über das Auslöserereignis Modell und Hersteller des Smartphones oder der Smartphone-Batterie umfassen, die Problemdaten ein Konzept umfassen, das eine App angibt, die Lösungsdaten eine alternative App für den gleichen Zweck wie die App umfassen, die alternative App weniger Energie als die App verbraucht und die Aktion das Deinstallieren der App und das Installieren der alternativen App umfasst; und
wobei das Abfragen des Kenntnisgraphen unter Verwendung der mindestens einen Regel und des mindestens einen Auslöserkonzepts umfasst:
-- Prüfen, ob der Hauptkennsatz der mindestens einen Regel mit jedweder Kante des Kenntnisgraphen zusammenhängt, die mit dem Knoten verbunden ist, der mit dem mindestens einen Auslöserkonzept zusammenhängt;
-- falls ja, Abfragen, als die Problemdaten, des Konzepts, das mit dem anderen Knoten zusammenhängt, der mit der Kante verbunden ist, die mit dem Hauptkennsatz zusammenhängt;
-- falls nein:
--- Verfolgen eines Pfads in dem Kenntnisgraphen, der von dem Knoten ausgeht, der mit dem mindestens einen Auslöserkonzept zusammenhängt, durch Verwenden des verknüpften Satzes von Definitionskennsätzen, wodurch, als die Problemdaten, das Konzept, das mit dem letzten Knoten des Pfads zusammenhängt, abgefragt wird;
--- Aktualisieren des Kenntnisgraphen durch Einsetzen einer Kante, die mit dem Hauptkennsatz zusammenhängt, die den Knoten, der mit dem mindestens einen Auslöserkonzept zusammenhängt, und den letzten Knoten des Pfads verbindet.

2. Computerimplementiertes Verfahren nach Anspruch 1, wobei das Abfragen der mindestens einen Regel das Abfragen einer Mehrzahl von Regeln umfasst und das Erhalten der Problemdaten umfasst:
- Durchführen einer Mehrzahl von Inferenzschritten für die Mehrzahl von Regeln nacheinander, wobei jeder Inferenzschritt für eine jeweilige Regel umfasst:
-- Prüfen (610), ob der Hauptkennsatz der jeweiligen Regel mit jedweder Kante des Kenntnisgraphen zusammenhängt, die mit dem Knoten verbunden ist, der mit dem mindestens einen Auslöserkonzept zusammenhängt;
-- falls ja, Abfragen (620) des Konzepts, das mit dem anderen Knoten zusammenhängt, der mit der Kante verbunden ist, die mit dem Hauptkennsatz zusammenhängt;
-- falls nein:
--- Prüfen (630), ob der verknüpfte Satz von Definitionskennsätzen mit mindestens einem Teilsatz von benachbarten Kanten des Kenntnisgraphen zusammenhängt, die mit dem Knoten verbunden sind, der mit dem mindestens einen Auslöserkonzept zusammenhängt;
--- falls ja:
---- Verfolgen (640) eines Pfads in dem Kenntnisgraphen ausgehend von dem Knoten, der mit dem mindestens einen Auslöserkonzept zusammenhängt, unter Verwendung des verknüpften Satzes von Definitionskennsätzen, wodurch das Konzept, das mit dem letzten Knoten des Pfads zusammenhängt, abgefragt wird;
---- Aktualisieren (650) des Kenntnisgraphen durch Einsetzen einer Kante, die mit dem Hauptkennsatz zusammenhängt, die den Knoten, der mit dem mindestens einen Auslöserkonzept zusammenhängt, und den letzten Knoten des Pfads verbindet;
--- falls nein, direkt Fortschreiten zu einem nachfolgenden Inferenzschritt, falls irgendeiner übrig ist;
- sobald die Mehrzahl von Inferenzschritten durchgeführt worden ist, Bestimmen (660), ob der Kenntnisgraph aktualisiert worden ist;
- wenn der Kenntnisgraph aktualisiert worden ist, erneut Durchführen der Mehrzahl von Inferenzschritten für die Mehrzahl von Regeln nacheinander.

3. Computerimplementiertes Verfahren nach einem der vorhergehenden Ansprüche, das ferner das Erhalten von zusätzlichen Problemdaten durch Abfragen eines zusätzlichen Kenntnisgraphen unter Verwendung der mindestens einen Regel und des mindestens einen Auslöserkonzepts umfasst, wobei die Lösungsdaten ferner auf der Basis der zusätzlichen Problemdaten erhalten werden.

4. Computerprogrammprodukt, das computerlesbare Anweisungen umfasst, die, wenn sie auf einen Computer geladen und auf diesem ausgeführt werden, bewirken, dass der Computer das Verfahren nach einem der Ansprüche 1 bis 3 durchführt.

5. System, umfassend:
eine Kenntnisgraph-Datenbank, die zum Speichern von Kenntnisgraphen ausgebildet ist, wobei ein Kenntnisgraph eine Mehrzahl von Knoten und eine Mehrzahl von Kanten umfasst, wobei jeder Knoten mit einem jeweiligen Konzept zusammenhängt und jede Kante mit einem jeweiligen Kennsatz zusammenhängt;
eine Regeldatenbank, die zum Speichern von Regeln ausgebildet ist, wobei eine Regel umfasst:
- einen Hauptkennsatz, der zwei Konzeptvariablen in Beziehung bringt, wobei jede Konzeptvariable zum Initialisieren zu einem Konzept ausgebildet ist;
- einen verknüpften Satz von Definitionskennsätzen, wobei jeder Definitionskennsatz zwei Konzeptvariablen in Beziehung bringt;
einen Prozessor, der ausgebildet ist zum:
- Erhalten (520) von Auslöserdaten, die mindestens ein Auslöserkonzept umfassen, wobei die Auslöserdaten Informationen über ein Auslöserereignis umfassen, wobei das Auslöserereignis ein Ereignis ist, das die Ausführung des computerimplementierten Verfahrens automatisch auslöst, und wobei das Auslöserkonzept ein Merkmal des Auslöserereignisses oder Teil eines Merkmals des Auslöserereignisses ist;
- Abfragen (540) mindestens einer Regel von der Regeldatenbank auf der Basis der Auslöserdaten, wobei die mindestens eine Regel mit einem oder mehreren Tag(s) zusammenhängt und mindestens ein Tag mit einem Teil der Auslöserdaten übereinstimmt;
- Erhalten (550) von Problemdaten durch Abfragen eines Kenntnisgraphen von der Kenntnisgraph-Datenbank unter Verwendung der mindestens einen Regel und des mindestens einen Auslöserkonzepts, wobei:
die Problemdaten Informationen über ein Problem umfassen und wobei mindestens ein Knoten des Kenntnisgraphen mit dem mindestens einen Auslöserkonzept zusammenhängt;
der Kenntnisgraph aus einer Mehrzahl von Kenntnisgraphen auf der Basis der Auslöserdaten ausgewählt wird; und
das Abfragen des Kenntnisgraphen unter Verwendung der mindestens einen Regel und des Auslöserkonzepts das Zuordnen eines Konzepts oder mehrerer Konzepte von dem Kenntnisgraphen zu den Konzeptvariablen der Kennsätze in der Regel umfasst;
- Erhalten (560) von Lösungsdaten auf der Basis der Problemdaten, wobei die Lösungsdaten Informationen über eine Lösung des Problems umfassen, das durch die Problemdaten identifiziert worden ist und wobei, zum Erhalten der Lösungsdaten, der Prozessor ausgebildet ist zum:
-- Zuführen der Problemdaten zu einem künstliche Intelligenz-System, das zum Bereitstellen der Lösungsdaten als Ausgabe trainiert worden ist; oder
-- Prüfen der Problemdaten bezüglich einer Datenbank, die Verknüpfungen zwischen Problemdaten und jeweiligen Lösungsdaten enthält;
- Durchführen (570) einer Aktion auf der Basis der Lösungsdaten, wobei das Durchführen der Aktion das Problem, das durch die Problemdaten identifiziert worden ist, in einer direkten oder indirekten Weise löst; wobei das Auslöserkonzept eine Smartphone-Batterie ist, das Auslöserereignis ein Abfall eines Ladungsniveaus der Smartphone-Batterie ist und die Informationen über das Auslöserereignis Modell und Hersteller des Smartphones oder der Smartphone-Batterie umfassen, die Problemdaten ein Konzept umfassen, das eine App angibt, die Lösungsdaten eine alternative App für den gleichen Zweck wie die App umfassen, die alternative App weniger Energie als die App verbraucht und die Aktion das Deinstallieren der App und das Installieren der alternativen App umfasst; und
wobei das Abfragen des Kenntnisgraphen unter Verwendung der mindestens einen Regel und des mindestens einen Auslöserkonzepts umfasst:
-- Prüfen, ob der Hauptkennsatz der mindestens einen Regel mit jedweder Kante des Kenntnisgraphen zusammenhängt, die mit dem Knoten verbunden ist, der mit dem mindestens einen Auslöserkonzept zusammenhängt;
-- falls ja, Abfragen, als die Problemdaten, des Konzepts, das mit dem anderen Knoten zusammenhängt, der mit der Kante verbunden ist, die mit dem Hauptkennsatz zusammenhängt;
-- falls nein:
--- Verfolgen eines Pfads in dem Kenntnisgraphen, der von dem Knoten ausgeht, der mit dem mindestens einen Auslöserkonzept zusammenhängt, durch Verwenden des verknüpften Satzes von Definitionskennsätzen, wodurch, als die Problemdaten, das Konzept, das mit dem letzten Knoten des Pfads zusammenhängt, abgefragt wird;
--- Aktualisieren des Kenntnisgraphen durch Einsetzen einer Kante, die mit dem Hauptkennsatz zusammenhängt, die den Knoten, der mit dem mindestens einen Auslöserkonzept zusammenhängt, und den letzten Knoten des Pfads verbindet.

6. System nach Anspruch 5, wobei der Prozessor zum Abfragen einer Mehrzahl von Regeln ausgebildet ist und der Prozessor zum Erhalten der Problemdaten ferner ausgebildet ist zum:
- Durchführen einer Mehrzahl von Inferenzschritten für die Mehrzahl von Regeln nacheinander, wobei jeder Inferenzschritt für eine jeweilige Regel umfasst:
- - Prüfen (610), ob der Hauptkennsatz der jeweiligen Regel mit jedweder Kante des Kenntnisgraphen zusammenhängt, die mit dem Knoten verbunden ist, der mit dem mindestens einen Auslöserkonzept zusammenhängt;
- - falls ja, Abfragen (620) des Konzepts, das mit dem anderen Knoten zusammenhängt, der mit der Kante verbunden ist, die mit dem Hauptkennsatz zusammenhängt;
- - falls nein:
--- Prüfen (630), ob der verknüpfte Satz von Definitionskennsätzen mit mindestens einem Teilsatz von benachbarten Kanten des Kenntnisgraphen zusammenhängt, die mit dem Knoten verbunden sind, der mit dem mindestens einen Auslöserkonzept zusammenhängt;
--- falls ja:
- --- Verfolgen (640) eines Pfads in dem Kenntnisgraphen ausgehend von dem Knoten, der mit dem mindestens einen Auslöserkonzept zusammenhängt, unter Verwendung des verknüpften Satzes von Definitionskennsätzen, wodurch das Konzept, das mit dem letzten Knoten des Pfads zusammenhängt, abgefragt wird;
- --- Aktualisieren (650) des Kenntnisgraphen durch Einsetzen einer Kante, die mit dem Hauptkennsatz zusammenhängt, die den Knoten, der mit dem mindestens einen Auslöserkonzept zusammenhängt, und den letzten Knoten des Pfads verbindet;
- -- falls nein, direkt Fortschreiten zu einem nachfolgenden Inferenzschritt, falls irgendeiner übrig ist;
- sobald die Mehrzahl von Inferenzschritten durchgeführt worden ist, Bestimmen (660), ob der Kenntnisgraph aktualisiert worden ist;
- wenn der Kenntnisgraph aktualisiert worden ist, erneut Durchführen der Mehrzahl von Inferenzschritten für die Mehrzahl von Regeln nacheinander.

7. System nach Anspruch 5 oder 6, wobei der Prozessor ferner zum Erhalten von zusätzlichen Problemdaten durch Abfragen eines zusätzlichen Kenntnisgraphen unter Verwendung der mindestens einen Regel und des mindestens einen Auslöserkonzepts ausgebildet ist, wobei die Lösungsdaten ferner auf der Basis der zusätzlichen Problemdaten erhalten werden.

## Revendications

1. Un procédé mis en œuvre par ordinateur comprenant les étapes consistant à :
- recevoir (520) de données de déclenchement comprenant au moins un concept de déclenchement, sachant que :
les données de déclenchement comprennent des informations relatives à un événement de déclenchement, l'événement de déclenchement étant un événement qui déclenche automatiquement l'exécution du procédé mis en œuvre par ordinateur, et sachant que le concept de déclenchement est une caractéristique de l'événement de déclenchement ou une partie d'une caractéristique de l'événement de déclenchement ;
- extraire (540) au moins une règle basée sur les données de déclenchement, sachant que la au moins une règle est associée à une ou plusieurs étiquettes (*tags*), et qu'au moins une étiquette correspond à une partie des données de déclenchement, et sachant qu'une règle comprend :
-- un libellé (*label*) principal reliant deux variables de concept, sachant que chaque variable de concept est configurée pour être initialisée à un concept ;
-- un ensemble concaténé de libellés de définition, chaque libellé de définition reliant deux variables de concept ;
- obtenir (550) des données de problème par interrogation d'un graphe de connaissances à l'aide de la au moins une règle et du ou des concepts de déclenchement, sachant que les données de problème comprennent des informations relatives à un problème, sachant que :
le graphe de connaissances comprend une pluralité de nœuds et une pluralité d'arêtes, chaque nœud étant associé à un concept respectif et chaque arête étant associée à un libellé respectif,
au moins un nœud est associé au ou aux concepts de déclenchement ;
le graphe de connaissances est choisi parmi une pluralité de graphes de connaissances sur la base des données de déclenchement ; et que
l'interrogation du graphe de connaissances à l'aide de la au moins une règle et du concept de déclenchement comprend l'affectation d'un ou plusieurs concepts du graphe de connaissances aux variables de concept des libellés dans la règle ;
- obtenir (560) des données de solution sur la base des données de problème, sachant que les données de solution comprennent des informations relatives à une solution au problème identifié par les données de problème, et sachant que l'obtention des données de solution comprend le fait de :
-- acheminer les données de problème vers un système d'intelligence artificielle entraîné pour fournir les données de solution en sortie ; ou
-- vérifier des données de problème par comparaison avec une base de données contenant des associations entre données de problème et données de solution respectives ;
- exécuter (570) une action sur la base des données de solution, sachant que l'exécution de l'action permet de résoudre de manière directe ou indirecte le problème identifié par les données de problème ;
sachant que le concept de déclenchement est une batterie de smartphone, l'événement de déclenchement est une chute du niveau de charge de la batterie du smartphone et que les informations concernant l'événement de déclenchement comprennent le modèle et le fabricant du smartphone ou de la batterie du smartphone, les données de problème comprennent un concept indiquant une application, les données de solution comprennent une application alternative pour la même finalité que l'application, l'application alternative consommant moins d'énergie que l'application, et que l'action comprend la désinstallation de l'application et l'installation de l'application alternative ; et
sachant que l'interrogation du graphe de connaissances à l'aide de la au moins une règle et du au moins un concept de déclenchement comprend le fait de :
-- vérifier si le libellé principal de la au moins une règle est associé à une arête quelconque du graphe de connaissances connectée au nœud associé au ou aux concepts de déclenchement ;
-- si tel est le cas, extraire en tant que données de problème du concept associé à l'autre nœud connecté à l'arête associée au libellé principal;
-- à défaut :
--- tracer un chemin dans le graphe de connaissances à partir du nœud associé au ou aux concepts de déclenchement en utilisant l'ensemble concaténé de libellés de définition, permettant d'extraire ainsi comme données de problème le concept associé au dernier nœud du chemin ;
--- mettre à jour le graphe de connaissances par insertion d'une arête associée au libellé principal qui relie le nœud associé au ou aux concepts de déclenchement et le dernier nœud du chemin.

2. Le procédé mis en œuvre par ordinateur d'après la revendication 1, sachant que l'extraction de la au moins une règle comprend l'extraction d'une pluralité de règles, et que l'obtention des données de problème comprend le fait de :
- exécuter une pluralité d'étapes d'inférence pour la pluralité de règles en séquence, chaque étape d'inférence comprenant, pour une règle respective, le fait de :
-- vérifier (610) si le libellé principal de la règle respective est associé à une arête quelconque du graphe de connaissances connectée au nœud associé au ou aux concepts de déclenchement ;
-- si tel est le cas, extraire (620) le concept associé à l'autre nœud connecté à l'arête associée au libellé principal ;
-- à défaut :
--- vérifier (630) si l'ensemble concaténé de libellés de définition est associé à au moins un sous-ensemble d'arêtes adjacentes du graphe de connaissances connectées au nœud associé au ou aux concepts de déclenchement :
--- si tel est le cas :
---- tracer (640) un chemin dans le graphe de connaissances à partir du nœud associé au ou aux concepts de déclenchement en utilisant l'ensemble concaténé de libellés de définition, permettant ainsi d'extraire le concept associé au dernier nœud du chemin ;
---- mettre à jour (650) le graphe de connaissances par insertion d'une arête associée au libellé principal qui relie le nœud associé au ou aux concepts de déclenchement et le dernier nœud du chemin ;
--- à défaut, passer directement à une étape d'inférence suivante, s'il en reste ;
- une fois la pluralité d'étapes d'inférence exécutée, déterminer (660) si le graphe de connaissances a été mis à jour ;
- si le graphe de connaissances a été mis à jour, réexécuter la pluralité d'étapes d'inférence pour la pluralité de règles en séquence.

3. Le procédé mis en œuvre par ordinateur d'après l'une quelconque des revendications précédentes, comprenant en outre le fait d'obtenir des données de problème supplémentaires en interrogeant un graphe de connaissances supplémentaire à l'aide de la ou des règles et du ou des concepts de déclenchement, sachant que les données de solution sont obtenues en outre sur la base des données de problème supplémentaires.

4. Un produit-programme informatique comprenant des instructions lisibles par ordinateur qui, lorsqu'elles sont chargées et exécutées sur un ordinateur, amènent l'ordinateur à exécuter le procédé d'après l'une quelconque des revendications de 1 à 3.

5. Un système comprenant :
une base de données de graphes de connaissances configurée pour stocker des graphes de connaissances, sachant qu'un graphe de connaissances comprend une pluralité de nœuds et une pluralité d'arêtes, chaque nœud étant associé à un concept respectif et chaque arête étant associée à un libellé respectif ;
une base de données de règles configurée pour stocker des règles, sachant qu'une règle comprend :
- un libellé principal reliant deux variables de concept, sachant que chaque variable de concept est configurée pour être initialisée à un concept ;
- un ensemble concaténé de libellés de définition, chaque libellé de définition reliant deux variables de concept ;
un processeur configuré pour :
- recevoir (520) des données de déclenchement comprenant au moins un concept de déclenchement, sachant que les données de déclenchement comprennent des informations relatives à un événement de déclenchement, l'événement de déclenchement étant un événement qui déclenche automatiquement l'exécution du procédé mis en œuvre par ordinateur, et sachant que le concept de déclenchement est une caractéristique de l'événement de déclenchement ou une partie d'une caractéristique de l'événement de déclenchement ;
- extraire (540) au moins une règle à partir de la base de données de règles sur la base des données de déclenchement, sachant que la ou les règles sont associées à une ou plusieurs étiquettes (*tags*) et qu'au moins une étiquette correspond à une partie des données de déclenchement ;
- obtenir (550) des données de problème par interrogation d'un graphe de connaissances à partir de la base de données de graphes de connaissances à l'aide de la au moins une règle et du ou des concepts de déclenchement, sachant que :
les données de problème comprennent des informations relatives à un problème, et sachant qu'au moins un nœud du graphe de connaissances est associé au ou aux concepts de déclenchement,
le graphe de connaissances est choisi parmi une pluralité de graphes de connaissances sur la base des données de déclenchement ; et que
l'interrogation du graphe de connaissances à l'aide de la au moins une règle et du concept de déclenchement comprend l'affectation d'un ou plusieurs concepts du graphe de connaissances aux variables de concept des libellés dans la règle ;
- obtenir (560) des données de solution sur la base des données de problème, sachant que les données de solution comprennent des informations relatives à une solution au problème identifié par les données de problème, et sachant que, pour obtenir les données de solution, le processeur est configuré pour :
-- acheminer les données de problème vers un système d'intelligence artificielle entraîné pour fournir les données de solution en sortie ; ou pour
-- vérifier des données de problème par comparaison avec une base de données contenant des associations entre données de problème et données de solution respectives ;
- exécuter (570) une action sur la base des données de solution, sachant que l'exécution de l'action permet de résoudre de manière directe ou indirecte le problème identifié par les données de problème ;
sachant que le concept de déclenchement est une batterie de smartphone, l'événement de déclenchement est une chute du niveau de charge de la batterie du smartphone et que les informations concernant l'événement de déclenchement comprennent le modèle et le fabricant du smartphone ou de la batterie du smartphone, les données de problème comprennent un concept indiquant une application, les données de solution comprennent une application alternative pour la même finalité que l'application, l'application alternative consommant moins d'énergie que l'application, et que l'action comprend la désinstallation de l'application et l'installation de l'application alternative ; et
sachant que l'interrogation du graphe de connaissances à l'aide de la au moins une règle et du au moins un concept de déclenchement comprend le fait de :
-- vérifier si le libellé principal de la au moins une règle est associé à une arête quelconque du graphe de connaissances connectée au nœud associé au ou aux concepts de déclenchement ;
-- si tel est le cas, extraire en tant que données de problème du concept associé à l'autre nœud connecté à l'arête associée au libellé principal;
-- à défaut :
--- tracer un chemin dans le graphe de connaissances à partir du nœud associé au ou aux concepts de déclenchement en utilisant l'ensemble concaténé de libellés de définition, permettant d'extraire ainsi comme données de problème le concept associé au dernier nœud du chemin ;
--- mettre à jour le graphe de connaissances par insertion d'une arête associée au libellé principal qui relie le nœud associé au ou aux concepts de déclenchement et le dernier nœud du chemin.

6. Le système d'après la revendication 5, sachant que le processeur est configuré pour extraire une pluralité de règles et, afin d'obtenir les données de problème, le processeur est en outre configuré pour :
- exécuter une pluralité d'étapes d'inférence pour la pluralité de règles en séquence, chaque étape d'inférence comprenant, pour une règle respective, le fait de :
-- vérifier (610) si le libellé principal de la règle respective est associé à une arête quelconque du graphe de connaissances connectée au nœud associé au ou aux concepts de déclenchement ;
-- si tel est le cas, extraire (620) le concept associé à l'autre nœud connecté à l'arête associée au libellé principal ;
-- à défaut :
--- vérifier (630) si l'ensemble concaténé de libellés de définition est associé à au moins un sous-ensemble d'arêtes adjacentes du graphe de connaissances connectées au nœud associé au ou aux concepts de déclenchement :
--- si tel est le cas :
---- tracer (640) un chemin dans le graphe de connaissances à partir du nœud associé au ou aux concepts de déclenchement en utilisant l'ensemble concaténé de libellés de définition, permettant ainsi d'extraire le concept associé au dernier nœud du chemin ;
---- mettre à jour (650) le graphe de connaissances par insertion d'une arête associée au libellé principal qui relie le nœud associé au ou aux concepts de déclenchement et le dernier nœud du chemin ;
--- à défaut, passer directement à une étape d'inférence suivante, s'il en reste ;
- une fois la pluralité d'étapes d'inférence exécutée, déterminer (660) si le graphe de connaissances a été mis à jour ;
- si le graphe de connaissances a été mis à jour, réexécuter la pluralité d'étapes d'inférence pour la pluralité de règles en séquence.

7. Le système d'après la revendication 5 ou 6, sachant que le processeur est en outre configuré pour obtenir des données de problème supplémentaires en interrogeant un graphe de connaissances supplémentaire à l'aide de la ou des règles et du ou des concepts de déclenchement, sachant que les données de solution sont obtenues en outre sur la base des données de problème supplémentaires.
